(19) Europäisches Patentamt
European Patent Office
Office européen des brevets

(11) EP 4 417 670 A1

(12) EUROPEAN PATENT APPLICATION
published in accordance with Art. 153(4) EPC

(43) Date of publication:
**21.08.2024 Bulletin 2024/34**

(21) Application number: **22880984.4**

(22) Date of filing: **11.10.2022**

(51) International Patent Classification (IPC):
***C09K 11/06*** *(2006.01)*

(52) Cooperative Patent Classification (CPC):
**C09K 11/06**

(86) International application number:
**PCT/JP2022/037781**

(87) International publication number:
**WO 2023/063289 (20.04.2023 Gazette 2023/16)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **14.10.2021 JP 2021169019**

(71) Applicant: **Idemitsu Kosan Co.,Ltd.**
**Tokyo 100-8321 (JP)**

(72) Inventors:
- **MURAKAMI, Yoichi**
  **Tokyo 152-8550 (JP)**
- **ENOMOTO, Riku**
  **Tokyo 152-8550 (JP)**
- **HOSHI, Megumi**
  **Tokyo 152-8550 (JP)**
- **KUROKAWA, Shinichi**
  **Tokyo 100-8321 (JP)**
- **KUMA, Hitoshi**
  **Tokyo 100-8321 (JP)**
- **AGATA, Hideki**
  **Atsugi-shi, Kanagawa 243-0123 (JP)**
- **WAKITA, Daisuke**
  **Atsugi-shi, Kanagawa 243-0123 (JP)**

(74) Representative: **Gille Hrabal Partnerschaftsgesellschaft mbB**
**Patentanwälte**
**Brucknerstraße 20**
**40593 Düsseldorf (DE)**

# (54) ORGANIC SOLID UP-CONVERSION MATERIAL

(57) An organic solid up-conversion material contains a triplet sensitizer and an organic luminescent material. The triplet sensitizer and the organic luminescent material satisfy relations of a numerical formula (Numerical Formula 1) and a numerical formula (Numerical Formula 2), and the triplet sensitizer and the organic luminescent material form a solid solution crystal.

$$T_1(M1) \geq T_1(M2) \cdots \text{(Numerical Formula 1)}$$

$$S_1(M2) > S_1(M1) \cdots \text{(Numerical Formula 2)}$$

($S_1$(M1) is the lowest singlet energy of the triplet sensitizer, $T_1$(M1) is the lowest triplet energy of the triplet sensitizer, $S_1$(M2) is the lowest singlet energy of the organic luminescent material, and $T_1$(M2) is the lowest triplet energy of the organic luminescent material.)

EP 4 417 670 A1

FIG. 1

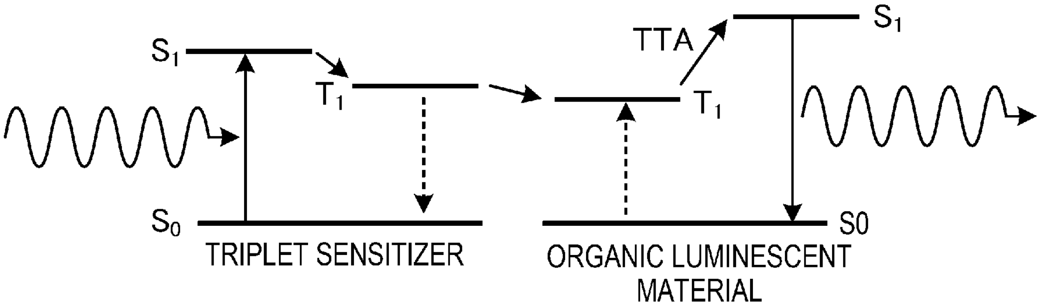
S1
T1
S0
TRIPLET SENSITIZER
TTA
S1
T1
S0
ORGANIC LUMINESCENT MATERIAL

## Description

TECHNICAL FIELD

The present invention relates to an organic solid up-conversion material.

BACKGROUND ART

Light up-conversion has attracted attention as a technology of converting low-energy light into high-energy light. For example, Non-Patent Literature 1 has proposed the following mechanism. In a combination of a sensitizer (for example, PtOEP) having a large intersystem crossing rate constant from the lowest singlet state to the lowest triplet state and luminous molecules (for example, diphenylanthracene (DPA)), the lowest singlet state is generated by triplet-triplet annihilation (TTA) between the luminous molecules (DPA) that have been excited to the lowest triplet state by energy transfer from the sensitizer, and light emission occurs.
In addition to Non-Patent Literature 1, for example, Patent Literatures 1 and 2 and Non-Patent Literatures 2 to 5 also describe technologies related to light up-conversion.

CITATION LIST

PATENT LITERATURES

Patent Literature 1: JP2020-111751A
Patent Literature 2: U.S. Patent No. 10,950,803

NON-PATENT LITERATURES

Non-Patent Literature 1: Journal of Applied Physics, 101, 023101 (2007)
Non-Patent Literature 2: J. Phys. Chem. Lett., 2013, 4, 4113-4118
Non-Patent Literature 3: J. Phys. Chem. C, 2014, 118, 14256-14265
Non-Patent Literature 4: Mater. Horiz., 2017, 4, 83-87
Non-Patent Literature 5: J. Mater. Chem. C, 2018, 6, 5609-5615

SUMMARY OF THE INVENTION

PROBLEMS TO BE SOLVED BY THE INVENTION

Practically, it is advantageous for light up-conversion materials to be in the solid state. However, light up-conversion materials in the solid state have a problem of a low up-conversion quantum efficiency and a problem of a large excitation light intensity threshold (Ith) at which up-conversion occurs. Non-Patent Literature 2 has suggested that the causes of these problems be aggregation of a sensitizer.
As means for suppressing the aggregation of a sensitizer, for example, Non-Patent Literature 2 discloses that a luminous molecule and a sensitizer are bonded to side chains of a polymer, Non-Patent Literature 3 discloses that a luminous molecule and a sensitizer are dispersed in a polymer such as polystyrene, Non-Patent Literature 4 discloses that an ink in which a sensitizer and luminous molecules are dissolved is cast on a substrate and rapidly dried to thereby cause solidification (non-equilibrium state) before the sensitizer is aggregated, and Non-Patent Literature 5 discloses that both a sensitizer and luminous molecules are ionic materials, and ionic crystals are formed using the sensitizer and the luminous molecules which are ionic materials to thereby achieve an improvement in crystallinity and homogeneous dispersion of the sensitizer.
Patent Literature 1 describes a photon up-conversion composition in which a triplet sensitizer (PtOEP) is dispersed in the form of microcrystals.
Patent Literature 2 describes a compound in which three components of a sensitizer, an acceptor material, and a luminescent material are connected together and discloses that a solution containing the compound exhibits up-conversion.
An object of the invention is to provide an organic solid up-conversion material that exhibits a high up-conversion

quantum efficiency at a low excitation light intensity even in the solid state and that exhibits high durability to excitation light.

MEANS FOR SOLVING THE PROBLEMS

According to an aspect of invention, there is provided an organic solid up-conversion material containing a triplet sensitizer and an organic luminescent material, in which the triplet sensitizer and the organic luminescent material satisfy relations of a numerical formula (Numerical Formula 1) and a numerical formula (Numerical Formula 2) below, and the triplet sensitizer and the organic luminescent material form a solid solution crystal,

$$T_1(M1) \geq T_1(M2) \cdots \text{(Numerical Formula 1)}$$

$$S_1(M2) > S_1(M1) \cdots \text{(Numerical Formula 2)}$$

$S_1(M1)$ is a lowest singlet energy of the triplet sensitizer,
$T_1(M1)$ is a lowest triplet energy of the triplet sensitizer,
$S_1(M2)$ is a lowest singlet energy of the organic luminescent material, and
$T_1(M2)$ is a lowest triplet energy of the organic luminescent material.

In the above aspect of the invention, the triplet sensitizer preferably absorbs excitation light to generate excited triplet excitons, and the organic luminescent material preferably emits light having a maximum peak in a shorter wavelength region relative to a local maximum peak wavelength closest to a long-wavelength region in an absorption spectrum of the triplet sensitizer.

In the above aspect of the invention, a molar volume of the organic luminescent material in the organic solid up-conversion material is preferably 360 $cm^3$/mol or more.

In the above aspect of the invention, a molar concentration of the triplet sensitizer relative to the organic luminescent material is preferably $1.0 \times 10^{-5}$ mol/L or more.

In the above aspect of the invention, a difference $\lambda_{M1}$ - $\lambda_{MC}$ between a maximum peak wavelength $\lambda_{M1}$ of a solution absorption spectrum of the triplet sensitizer alone and a maximum peak wavelength $\lambda_{MC}$ of a solid absorption spectrum of a mixture containing the organic luminescent material and the triplet sensitizer is preferably 5 nm or less.

In the above aspect of the invention, the organic luminescent material preferably has a triplet excitation lifetime of 1 ms or more.

In the above aspect of the invention, the organic luminescent material is preferably an anthracene derivative.

In the above aspect of the invention, the organic luminescent material is preferably a compound represented by formula (10) below or a compound represented by formula (11) below,

[Formula 1]

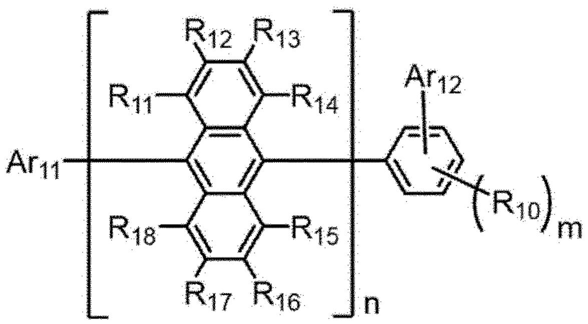

(10)

In the formula (10):

$Ar_{11}$ is a substituted or unsubstituted fused aryl group having 10 to 50 ring carbon atoms,
$Ar_{12}$ is a substituted or unsubstituted aryl group having 6 to 50 ring carbon atoms,
$R_{10}$ to $R_{18}$ are each independently a hydrogen atom, a substituted or unsubstituted aryl group having 6 to 50 ring carbon atoms, a substituted or unsubstituted heterocyclic group having 5 to 50 ring atoms, a substituted or unsubstituted alkyl group having 1 to 50 carbon atoms, a substituted or unsubstituted cycloalkyl group having 3 to 50 ring carbon atoms, a substituted or unsubstituted alkoxy group having 1 to 50 carbon atoms, a substituted or unsubstituted

aralkyl group having 7 to 50 carbon atoms, a substituted or unsubstituted aryloxy group having 6 to 50 ring carbon atoms, a substituted or unsubstituted arylthio group having 6 to 50 ring carbon atoms, a substituted or unsubstituted alkoxycarbonyl group having 1 to 50 carbon atoms, a carboxy group, a halogen atom, a cyano group, a nitro group, or a hydroxy group,

four $R_{10}$ are mutually the same or different,

m is 4,

n is 1, 2, or 3, and

when n is 2 or 3, groups represented by formula (1 0a) below in the compound represented by the formula (10) are mutually the same or different.

[Formula 2]

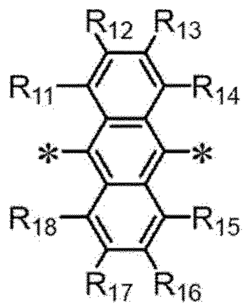

(10a)

[Formula 3]

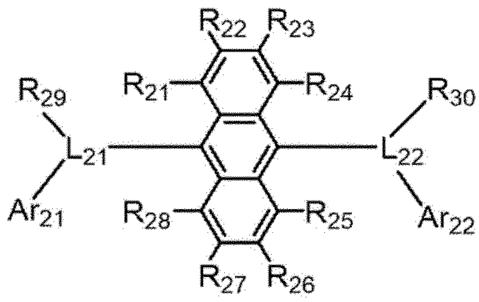

(11)

In the formula (11):

$L_{21}$ and $L_{22}$ are each independently a substituted or unsubstituted fused aryl group having 10 to 20 ring carbon atoms,

$Ar_{21}$ and $Ar_{22}$ are each independently a hydrogen atom or a substituted or unsubstituted aryl group having 6 to 50 ring carbon atoms,

$R_{21}$ to $R_{30}$ are each independently a hydrogen atom, a substituted or unsubstituted aryl group having 6 to 50 ring carbon atoms, a substituted or unsubstituted heterocyclic group having 5 to 50 ring atoms, a substituted or unsubstituted alkyl group having 1 to 50 carbon atoms, a substituted or unsubstituted cycloalkyl group having 3 to 50 ring carbon atoms, a substituted or unsubstituted alkoxy group having 1 to 50 carbon atoms, a substituted or unsubstituted aralkyl group having 7 to 50 carbon atoms, a substituted or unsubstituted aryloxy group having 6 to 50 ring carbon atoms, a substituted or unsubstituted arylthio group having 6 to 50 ring carbon atoms, a substituted or unsubstituted alkoxycarbonyl group having 1 to 50 carbon atoms, a substituted or unsubstituted silyl group, a carboxy group, a halogen atom, a cyano group, a nitro group, or a hydroxy group,

a plurality of $Ar_{21}$, a plurality of $Ar_{22}$, a plurality of $R_{29}$, and a plurality of $R_{30}$ may be present,

a combination of adjacent two or more of $Ar_{21}$ and $R_{29}$ are mutually bonded to form a substituted or unsubstituted monocyclic ring, mutually bonded to form a substituted or unsubstituted fused ring, or not mutually bonded,

a combination of adjacent two or more of $Ar_{22}$ and $R_{30}$ are mutually bonded to form a substituted or unsubstituted monocyclic ring, mutually bonded to form a substituted or unsubstituted fused ring, or not mutually bonded, and

a group represented by formula (11a) below and a group represented by formula (11b) below in the compound represented by the formula (11) are groups different from each other.

[Formula 4]

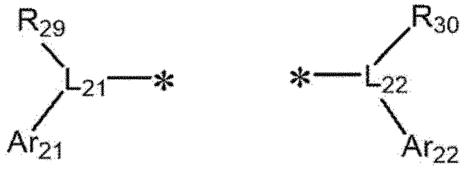

(11a) (11b)

In the above aspect t of the invention, the triplet sensitizer is preferably an organic metal complex.

In the above aspect of the invention, the triplet sensitizer preferably contains a platinum atom.

The above aspect of the invention can provide an organic solid up-conversion material that exhibits a high up-conversion quantum efficiency at a low excitation light intensity even in the solid state and that exhibits high durability to excitation light.

BRIEF DESCRIPTION OF DRAWINGS

Fig. 1 is a diagram showing an up-conversion mechanism in an organic solid up-conversion material according to an exemplary embodiment.

Fig. 2 is a thermodynamic equilibrium phase diagram for a binary molecular mixture system, the phase diagram showing a solid solution phase in an organic solid up-conversion material according to an exemplary embodiment.

Fig. 3 is a graph showing an emission spectrum of a solid material according to Example 1.

DESCRIPTION OF EMBODIMENTS

An organic solid up-conversion material of the present exemplary embodiment includes a triplet sensitizer and an organic luminescent material, in which the triplet sensitizer and the organic luminescent material satisfy relations of a numerical formula (Numerical Formula 1) and a numerical formula (Numerical Formula 2) below, and the triplet sensitizer and the organic luminescent material form a solid solution crystal corresponding to, for example, an "α phase" in Fig. 2.

$$T_1(M1) \geq T_1(M2) \cdots \text{(Numerical Formula 1)}$$

$$S_1(M2) > S_1(M1) \cdots \text{(Numerical Formula 2)}$$

The fact that the triplet sensitizer and the organic luminescent material form a solid solution crystal can be confirmed on the basis of the following: when a maximum peak wavelength $\lambda_{M1}$ of a solution absorption spectrum of the triplet sensitizer alone is compared with a maximum peak wavelength $\lambda_{MC}$ of a solid absorption spectrum of an up-conversion material containing the organic luminescent material and the triplet sensitizer, the difference between the maximum peak wavelength $\lambda_{M1}$ and the maximum peak wavelength $\lambda_{MC}$ is 5 nm or less; and the up-conversion material is monocrystalline. The fact that the up-conversion material is monocrystalline can be confirmed by X-ray structure analysis.

In the numerical formula (Numerical Formula 1) and the numerical formula (Numerical Formula 2), $S_1$(M1) is the lowest singlet energy of the triplet sensitizer, $T_1$(M1) is the lowest triplet energy of the triplet sensitizer, $S_1$(M2) is the lowest singlet energy of the organic luminescent material, and $T_1$(M2) is the lowest triplet energy of the organic luminescent material. The lowest singlet energies and the lowest triplet energies can be measured by the methods described in the sections of Examples below.

In the organic solid up-conversion material of the present exemplary embodiment, the triplet sensitizer absorbs excitation light and is excited, and triplet excitons are generated through intersystem crossing from the lowest singlet state to the lowest triplet state. When the triplet sensitizer and the organic luminescent material satisfy the numerical formula (Numerical Formula 1), the energy transfer of the triplet excitons easily occurs from the triplet sensitizer to the organic luminescent material. Triplet excitons of the organic luminescent material generated by the triplet-triplet energy transfer from the triplet sensitizer diffuse within the crystals of organic luminescent material molecules and collide with

each other, resulting in triplet-triplet annihilation (TTA). As a result of TTA, singlet excitons of organic luminescent material molecules are generated. Since the triplet sensitizer and the organic luminescent material satisfy the numerical formula (Numerical Formula 2), the organic luminescent material, which has a larger lowest singlet energy than the triplet sensitizer, can emit light with a shorter wavelength than the light absorbed by the triplet sensitizer (up-conversion).

Fig. 1 shows an up-conversion mechanism in the organic solid up-conversion material of the exemplary embodiment. As shown in Fig. 1, the lowest triplet state of the triplet sensitizer is generated by intersystem crossing from the lowest singlet state excited by absorbing excitation light, triplet-triplet energy transfer to the organic luminescent material occurs to generate the lowest triplet state of the organic luminescent material. When two organic luminescent material molecules in the triplet state collide with each other, the lowest singlet state of the organic luminescent material is generated by TTA. Emission occurs from the lowest singlet state of the organic luminescent material, which is at a higher energy level than the lowest singlet state of the triplet sensitizer.

In the organic solid up-conversion material of the present exemplary embodiment, the lowest singlet energy $S_1(M2)$ of the organic luminescent material is preferably smaller than a value twice the lowest triplet energy $T_1(M2)$ of the organic luminescent material. Specifically, in the organic solid up-conversion material of the present exemplary embodiment, the organic luminescent material is preferably a compound satisfying a relation of a numerical formula (Numerical Formula 4) below.

$$S_1(M2) < T_1(M2) \times 2 \cdots \text{(Numerical Formula 4)}$$

In the organic solid up-conversion material of the present exemplary embodiment, the triplet sensitizer and the organic luminescent material form a solid solution crystal. In this solid solution crystal, preferably, the organic luminescent material is in the form of a crystal, and the triplet sensitizer is dissolved in the crystal of the organic luminescent material. Since the organic solid up-conversion material of the present exemplary embodiment is in the form of a solid solution crystal of the triplet sensitizer and the organic luminescent material, the organic solid up-conversion material is thermodynamically stable, and the triplet sensitizer is stably dispersed in the solid of the organic luminescent material at a high concentration without aggregation at a molecular level. In the thermodynamic equilibrium phase diagram shown in Fig. 2, the region indicated by symbol A1 is a solid solution phase labeled as "$\alpha$ phase", and the solid solution in the organic solid up-conversion material of the present exemplary embodiment corresponds to the $\alpha$ phase or a phase equivalent to the $\alpha$ phase. This $\alpha$ phase is a thermodynamically stable phase in which a small amount of molecules of the triplet sensitizer is dissolved in the mother crystal of molecules of the organic luminescent material. The solid solubility limit of molecules of the triplet sensitizer to the crystal phase of molecules of the organic luminescent material can be known from a thermodynamic equilibrium phase diagram of a binary molecular mixture system related to the organic luminescent material molecules and triplet sensitizer molecules, as schematically illustrated in Fig. 2. Fig. 2 is a typical phase diagram in the simplest case, and, in reality, even in a phase diagram slightly different from this, the gist of the invention is essentially established. When the molar ratio of molecules of the organic luminescent material and molecules of the triplet sensitizer is within a range that allows formation of a solid solution phase in which the molecules of the triplet sensitizer are dissolved in the mother crystal of the molecules of the organic luminescent material, the solid solution state can be maintained for a long period of time. It should be noted that such a thermodynamic equilibrium phase diagram of a binary molecular mixture system can be prepared in accordance with, for example, an experimental method for preparing a phase diagram, the method being commonly employed by those skilled in the art. The binary molecular mixture system may also be referred to as a finite mixture eutectic system.

Accordingly, the organic solid up-conversion material of the present exemplary embodiment exhibits a high up-conversion quantum efficiency at a low excitation light intensity and exhibits high durability to excitation light. For example, the organic solid up-conversion material of the present exemplary embodiment exhibits high up-conversion emission at a low excitation light intensity on a sunlight intensity level on the surface of the earth and is excellent in heat resistance and continuous use durability. Furthermore, in the organic solid up-conversion material of the present exemplary embodiment, neither the triplet sensitizer nor the organic luminescent material is an ionic material (ionic liquid), and therefore, the organic solid up-conversion material of the present exemplary embodiment is also chemically stable.

The organic solid up-conversion material of the present exemplary embodiment can be used in various applications (for example, photocatalysts, solar cells, and photo-organic synthesis).

In the organic solid up-conversion material of the present exemplary embodiment, the triplet sensitizer is a material that absorbs excitation light and generates excited triplet excitons.

In the organic solid up-conversion material of the present exemplary embodiment, the organic luminescent material is preferably a material that emits light having a maximum peak in a shorter wavelength region relative to a local maximum peak wavelength closest to a long-wavelength region in an absorption spectrum of the triplet sensitizer. Herein, the local maximum peak wavelength of the triplet sensitizer refers to a local maximum peak wavelength in an absorption spectrum of the triplet sensitizer alone, and the maximum peak wavelength of the organic luminescent material

refers to a maximum peak wavelength in an emission spectrum of the organic luminescent material alone.

In the organic solid up-conversion material of the present exemplary embodiment, the molar volume of the organic luminescent material is preferably 360 $cm^3$/mol or more, more preferably 400 $cm^3$/mol or more, and still more preferably 450 $cm^3$/mol or more. When the molar volume of the organic luminescent material is 360 $cm^3$/mol or more, the triplet sensitizer can be dissolved in the crystal of the organic luminescent material in a larger amount.

In the organic solid up-conversion material of the present exemplary embodiment, the molar volume of the organic luminescent material is preferably 5,000 $cm^3$/mol or less. When the molar volume of the organic luminescent material is 5,000 $cm^3$/mol or less, the energy transfer efficiency from the triplet sensitizer to the organic luminescent material can be increased.

The molar volume of the organic luminescent material in the organic solid up-conversion material can be calculated by single-crystal X-ray structure analysis and more specifically calculated by the method described in the section of Examples below.

In the organic solid up-conversion material of the present exemplary embodiment, the molar concentration of the triplet sensitizer relative to the organic luminescent material is preferably $1.0 \times 10^{-5}$ mol/L or more, more preferably $3.0 \times 10^{-5}$ mol/L or more, and still more preferably $6.0 \times 10^{-5}$ mol/L or more. When the molar concentration of the triplet sensitizer is $1.0 \times 10^{-5}$ mol/L or more, the triplet sensitizer is dissolved in the crystal of the organic luminescent material in a larger amount, and the up-conversion quantum efficiency is easily improved.

In the organic solid up-conversion material of the present exemplary embodiment, the molar concentration of the triplet sensitizer relative to the organic luminescent material is preferably $1.0 \times 10^{-2}$ mol/L or less. When the molar concentration of the triplet sensitizer relative to the organic luminescent material is $1.0 \times 10^{-2}$ mol/L or less, aggregation of the triplet sensitizer due to an excessively high concentration can be prevented to prevent a decrease in the up-conversion quantum efficiency due to precipitation of the triplet sensitizer on the surface of the up-conversion material.

The molar concentration of the triplet sensitizer can be measured by the method described in the section of Examples below.

In the organic solid up-conversion material of the present exemplary embodiment, the molar ratio of the organic luminescent material to the triplet sensitizer (organic luminescent material:triplet sensitizer) is preferably 1,000:1 to 500,000:1, more preferably 1,000:1 to 100,000:1, and still more preferably 1,000:1 to 70,000:1.

When the molar ratio of the organic luminescent material to the triplet sensitizer is in a range of 1,000:1 to 500,000:1, the triplet sensitizer is dissolved in the crystal of the organic luminescent material in a larger amount, and the up-conversion quantum efficiency is easily improved.

The molar ratio of the organic luminescent material to the triplet sensitizer can be measured by the method described in the section of Examples below.

Herein, a numerical range expressed using, for example, "AA to BB" means a range including the numerical value AA given before "to" of "AA to BB" as the lower limit value and the numerical value BB given after "to" of "AA to BB" as the upper limit value.

In the organic solid up-conversion material of the present exemplary embodiment, the difference $\lambda_{M1} - \lambda_{MC}$ between a maximum peak wavelength $\lambda_{M1}$ of a solution absorption spectrum of the triplet sensitizer alone and a maximum peak wavelength $\lambda_{MC}$ of a solid absorption spectrum of a mixture containing the organic luminescent material and the triplet sensitizer is preferably 5 nm or less. When the difference $\lambda_{M1} - \lambda_{MC}$ between the peak wavelengths is 5 nm or less, aggregation of the triplet sensitizer in the solid solution crystal is suppressed, and the triplet sensitizer can be more stably dispersed at a molecular level.

The maximum peak wavelength of the solution absorption spectrum and the maximum peak wavelength of the solid absorption spectrum can be measured by the method described in the section of Examples below.

In the organic solid up-conversion material of the present exemplary embodiment, the triplet excitation lifetime of the organic luminescent material is preferably 1 ms or more, more preferably 2 ms or more, and still more preferably 3 ms or more. When the triplet excitation lifetime of the organic luminescent material is 1 ms or more, the collision probability between triplet excitons is improved, and the efficiency of TTA is also improved.

In the organic solid up-conversion material of the present exemplary embodiment, the triplet excitation lifetime of the organic luminescent material is preferably 100 ms or less, more preferably 50 ms or less. When the triplet excitation lifetime of the organic luminescent material is 100 ms or less, deactivation of triplet excitons due to heat and oxygen can be suppressed.

The triplet excitation lifetime of the organic luminescent material can be measured by the method described in the section of Examples below.

In the organic solid up-conversion material of the present exemplary embodiment, the organic luminescent material is preferably in the form of a crystal. In the organic solid up-conversion material of the present exemplary embodiment, the crystal structure of a solid solution crystal in which the triplet sensitizer is dissolved preferably maintains the crystal structure of the organic luminescent material alone.

In the organic solid up-conversion material of the present exemplary embodiment, the crystal of the organic

luminescent material is preferably transparent and may be colorless transparent or colored transparent.

The up-conversion quantum efficiency of the organic solid up-conversion material of the present exemplary embodiment is preferably 10% or more, more preferably 20% or more, and still more preferably 25% or more. The up-conversion quantum efficiency can be measured by the method described in the section of Examples below.

In the organic solid up-conversion material of the present exemplary embodiment, the organic luminescent material is preferably an anthracene derivative. When the organic luminescent material is an anthracene derivative, the up-conversion quantum efficiency is easily improved.

In the organic solid up-conversion material of the present exemplary embodiment, the anthracene derivative serving as the organic luminescent material is preferably a compound in which substituents having structures different from each other (preferably substituted or unsubstituted aryl groups different from each other) are bonded to the 9-position carbon atom and the 10-position carbon atom of the anthracene ring. Herein, a compound having substituents having structures different from each other at the 9-position carbon atom and the 10-position carbon atom of the anthracene ring may be referred to as an asymmetric anthracene compound. When the anthracene derivative serving as the organic luminescent material is an asymmetric anthracene compound, the triplet sensitizer is easily dissolved in the crystal structure of the organic luminescent material.

In the organic solid up-conversion material of the present exemplary embodiment, the organic luminescent material is preferably a compound represented by formula (10) below or a compound represented by formula (11) below.

[Formula 5]

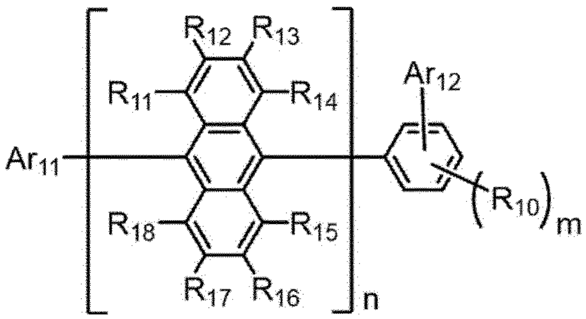

(10)

In the formula (10):

$Ar_{11}$ is a substituted or unsubstituted fused aryl group having 10 to 50 ring carbon atoms,
$Ar_{12}$ is a substituted or unsubstituted aryl group having 6 to 50 ring carbon atoms,
$R_{10}$ to $R_{18}$ are each independently a hydrogen atom, a substituted or unsubstituted aryl group having 6 to 50 ring carbon atoms, a substituted or unsubstituted heterocyclic group having 5 to 50 ring atoms, a substituted or unsubstituted alkyl group having 1 to 50 carbon atoms, a substituted or unsubstituted cycloalkyl group having 3 to 50 ring carbon atoms, a substituted or unsubstituted alkoxy group having 1 to 50 carbon atoms, a substituted or unsubstituted aralkyl group having 7 to 50 carbon atoms, a substituted or unsubstituted aryloxy group having 6 to 50 ring carbon atoms, a substituted or unsubstituted arylthio group having 6 to 50 ring carbon atoms, a substituted or unsubstituted alkoxycarbonyl group having 1 to 50 carbon atoms, a carboxy group, a halogen atom, a cyano group, a nitro group, or a hydroxy group,
four $R_{10}$ are mutually the same or different,
m is 4,
n is 1, 2, or 3, and
when n is 2 or 3, groups represented by formula (10a) below in the compound represented by the formula (10) are mutually the same or different, and each * represents a bonding position.

[Formula 6]

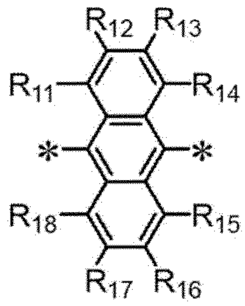

(10a)

[Formula 7]

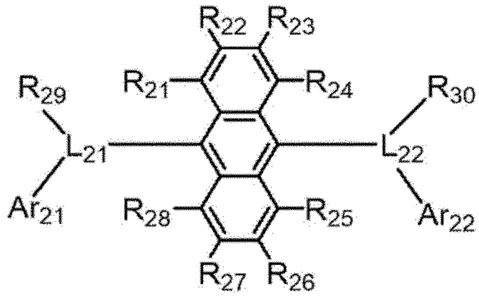

(11)

In the formula (11):

$L_{21}$ and $L_{22}$ are each independently a substituted or unsubstituted fused aryl group having 10 to 20 ring carbon atoms,
$Ar_{21}$ and $Ar_{22}$ are each independently a hydrogen atom or a substituted or unsubstituted aryl group having 6 to 50 ring carbon atoms,
$R_{21}$ to $R_{30}$ are each independently a hydrogen atom, a substituted or unsubstituted aryl group having 6 to 50 ring carbon atoms, a substituted or unsubstituted heterocyclic group having 5 to 50 ring atoms, a substituted or unsubstituted alkyl group having 1 to 50 carbon atoms, a substituted or unsubstituted cycloalkyl group having 3 to 50 ring carbon atoms, a substituted or unsubstituted alkoxy group having 1 to 50 carbon atoms, a substituted or unsubstituted aralkyl group having 7 to 50 carbon atoms, a substituted or unsubstituted aryloxy group having 6 to 50 ring carbon atoms, a substituted or unsubstituted arylthio group having 6 to 50 ring carbon atoms, a substituted or unsubstituted alkoxycarbonyl group having 1 to 50 carbon atoms, a substituted or unsubstituted silyl group, a carboxy group, a halogen atom, a cyano group, a nitro group, or a hydroxy group,
a plurality of $Ar_{21}$, a plurality of $Ar_{22}$, a plurality of $R_{29}$, and a plurality of $R_{30}$ may be present,
a combination of adjacent two or more of $Ar_{21}$ and $R_{29}$ are mutually bonded to form a substituted or unsubstituted monocyclic ring, mutually bonded to form a substituted or unsubstituted fused ring, or not mutually bonded,
a combination of adjacent two or more of $Ar_{22}$ and $R_{30}$ are mutually bonded to form a substituted or unsubstituted monocyclic ring, mutually bonded to form a substituted or unsubstituted fused ring, or not mutually bonded,
a group represented by formula (11a) below and a group represented by formula (11b) below in the compound represented by the formula (11) are groups different from each other, and each * represents a bonding position.

[Formula 8]

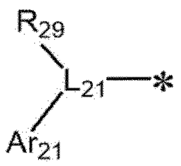

(11a)

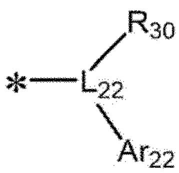

(11b)

Examples of the substituents in the formula (10) or the formula (11) include substituents described in International Publication No. 2004/018587 or International Publication No. 2005/061656.

Examples of the substituted or unsubstituted fused aryl group having 10 to 50 ring carbon atoms include a 1-naphthyl group, 2-naphthyl group, 1-anthryl group, 2-anthryl group, 9-anthryl group, 1-phenanthryl group, 2-phenanthryl group, 3-phenanthryl group, 4-phenanthryl group, 9-phenanthryl group, 1-naphthacenyl group, 2-naphthacenyl group, 9-naphthacenyl group, 1-pyrenyl group, 2-pyrenyl group, 4-pyrenyl group, 3-methyl-2-naphthyl group, 4-methyl-1-naphthyl group, and 4-methyl-1-anthryl group.

Examples of the substituted or unsubstituted aryl group having 6 to 50 ring carbon atoms include a phenyl group, 1-naphthyl group, 2-naphthyl group, 1-anthryl group, 2-anthryl group, 9-anthryl group, 1-phenanthryl group, 2-phenanthryl group, 3-phenanthryl group, 4-phenanthryl group, 9-phenanthryl group, 1-naphthacenyl group, 2-naphthacenyl group, 9-naphthacenyl group, 1-pyrenyl group, 2-pyrenyl group, 4-pyrenyl group, 2-biphenylyl group, 3-biphenylyl group, 4-biphenylyl group, p-terphenyl-4-yl group, p-terphenyl-3-yl group, p-terphenyl-2-yl group, m-terphenyl-4-yl group, m-terphenyl-3-yl group, m-terphenyl-2-yl group, o-tolyl group, m-tolyl group, p-tolyl group, p-t-butylphenyl group, p-(2-phenylpropyl)phenyl group, 3-methyl-2-naphthyl group, 4-methyl-1-naphthyl group, 4-methyl-1-anthryl group, 4'-methylbiphenylyl group, and 4"-t-butyl-p-terphenyl-4-yl group.

Examples of the substituted or unsubstituted heterocyclic group having 5 to 50 ring atoms include a 1-pyrrolyl group, 2-pyrrolyl group, 3-pyrrolyl group, pyrazinyl group, 2-pyridinyl group, 3-pyridinyl group, 4-pyridinyl group, 1-indolyl group, 2-indolyl group, 3-indolyl group, 4-indolyl group, 5-indolyl group, 6-indolyl group, 7-indolyl group, 1-isoindolyl group, 2-isoindolyl group, 3-isoindolyl group, 4-isoindolyl group, 5-isoindolyl group, 6-isoindolyl group, 7-isoindolyl group, 2-furyl group, 3-furyl group, 2-benzofuranyl group, 3-benzofuranyl group, 4-benzofuranyl group, 5-benzofuranyl group, 6-benzofuranyl group, 7-benzofuranyl group, 1-isobenzofuranyl group, 3-isobenzofuranyl group, 4-isobenzofuranyl group, 5-isobenzofuranyl group, 6-isobenzofuranyl group, 7-isobenzofuranyl group, quinolyl group, 3-quinolyl group, 4-quinolyl group, 5-quinolyl group, 6-quinolyl group, 7-quinolyl group, 8-quinolyl group, 1-isoquinolyl group, 3-isoquinolyl group, 4-isoquinolyl group, 5-isoquinolyl group, 6-isoquinolyl group, 7-isoquinolyl group, 8-isoquinolyl group, 2-quinoxalinyl group, 5-quinoxalinyl group, 6-quinoxalinyl group, 1-carbazolyl group, 2-carbazolyl group, 3-carbazolyl group, 4-carbazolyl group, 9-carbazolyl group, 1-phenanthridinyl group, 2-phenanthridinyl group, 3-phenanthridinyl group, 4-phenanthridinyl group, 6-phenanthridinyl group, 7-phenanthridinyl group, 8-phenanthridinyl group, 9-phenanthridinyl group, 10-phenanthridinyl group, 1-acridinyl group, 2-acridinyl group, 3-acridinyl group, 4-acridinyl group, 9-acridinyl group, 1,7-phenanthrolin-2-yl group, 1,7-phenanthrolin-3-yl group, 1,7-phenanthrolin-4-yl group, 1,7-phenanthrolin-5-yl group, 1,7-phenanthrolin-6-yl group, 1,7-phenanthrolin-8-yl group, 1,7-phenanthrolin-9-yl group, 1,7-phenanthrolin-10-yl group, 1,8-phenanthrolin-2-yl group, 1,8-phenanthrolin-3-yl group, 1,8-phenanthrolin-4-yl group, 1,8-phenanthrolin-5-yl group, 1,8-phenanthrolin-6-yl group, 1,8-phenanthrolin-7-yl group, 1,8-phenanthrolin-9-yl group, 1,8-phenanthrolin-10-yl group, 1,9-phenanthrolin-2-yl group, 1,9-phenanthrolin-3-yl group, 1,9-phenanthrolin-4-yl group, 1,9-phenanthrolin-5-yl group, 1,9-phenanthrolin-6-yl group, 1,9-phenanthrolin-7-yl group, 1,9-phenanthrolin-8-yl group, 1,9-phenanthrolin-10-yl group, 1,10-phenanthrolin-2-yl group, 1,10-phenanthrolin-3-yl group, 1,10-phenanthrolin-4-yl group, 1,10-phenanthrolin-5-yl group, 2,9-phenanthrolin-1-yl group, 2,9-phenanthrolin-3-yl group, 2,9-phenanthrolin-4-yl group, 2,9-phenanthrolin-5-yl group, 2,9-phenanthrolin-6-yl group, 2,9-phenanthrolin-7-yl group, 2,9-phenanthrolin-8-yl group, 2,9-phenanthrolin-10-yl group, 2,8-phenanthrolin-1-yl group, 2,8-phenanthrolin-3-yl group, 2,8-phenanthrolin-4-yl group, 2,8-phenanthrolin-5-yl group, 2,8-phenanthrolin-6-yl group, 2,8-phenanthrolin-7-yl group, 2,8-phenanthrolin-9-yl group, 2,8-phenanthrolin-10-yl group, 2,7-phenanthrolin-1-yl group, 2,7-phenanthrolin-3-yl group, 2,7-phenanthrolin-4-yl group, 2,7-phenanthrolin-5-yl group, 2,7-phenanthrolin-6-yl group, 2,7-phenanthrolin-8-yl group, 2,7-phenanthrolin-9-yl group, 2,7-phenanthrolin-10-yl group, 1-phenazinyl group, 2-phenazinyl group, 1-phenothiazinyl group, 2-phenothiazinyl group, 3-phenothiazinyl group, 4-phenothiazinyl group, 10-phenothiazinyl group, 1-phenoxazinyl group, 2-phenoxazinyl group, 3-phenoxazinyl group, 4-phenoxazinyl group, 10-phenoxazinyl group, 2-oxazolyl group, 4-oxazolyl group, 5-oxazolyl group, 2-oxadiazolyl group, 5-oxadiazolyl group, 3-furazanyl group, 2-thienyl group, 3-thienyl group, 2-methylpyrrol-1-yl group, 2-methylpyrrol-3-yl group, 2-methylpyrrol-4-yl group, 2-methylpyrrol-5-yl group, 3-methylpyrrol-1-yl group, 3-methylpyrrol-2-yl group, 3-methylpyrrol-4-yl group, 3-methylpyrrol-5-yl group, 2-t-butylpyrrol-4-yl group, 3-(2-phenylpropyl)pyrrol-1-yl group, 2-methyl-1-indolyl group, 4-methyl-1-indolyl group, 2-methyl-3-indolyl group, 4-methyl-3-indolyl group, 2-t-butyl 1-indolyl group, 4-t-butyl 1-indolyl group, 2-t-butyl 3-indolyl group, and 4-t-butyl 3-indolyl group.

Examples of the substituted or unsubstituted alkyl group having 1 to 50 carbon atoms include a methyl group, ethyl group, propyl group, isopropyl group, n-butyl group, s-butyl group, isobutyl group, t-butyl group, n-pentyl group, n-hexyl group, n-heptyl group, n-octyl group, hydroxymethyl group, 1-hydroxyethyl group, 2-hydroxyethyl group, 2-hydroxyisobutyl group, 1,2-dihydroxyethyl group, 1,3-dihydroxyisopropyl group, 2,3-dihydroxy-t-butyl group, 1,2,3-trihydroxypropyl group, chloromethyl group, 1-chloroethyl group, 2-chloroethyl group, 2-chloroisobutyl group, 1,2-dichloroethyl group, 1,3-dichloroisopropyl group, 2,3-dichloro-t-butyl group, 1,2,3-trichloropropyl group, bromomethyl group, 1-bromoethyl group, 2-bromoethyl group, 2-bromoisobutyl group, 1,2-dibromoethyl group, 1,3-dibromoisopropyl group, 2,3-dibromo-t-butyl group, 1,2,3-tribromopropyl group, iodomethyl group, 1-iodoethyl group, 2-iodoethyl group, 2-iodoisobutyl group, 1,2-diiodoethyl group, 1,3-diiodoisopropyl group, 2,3-diiodo-t-butyl group, 1,2,3-triiodopropyl group, aminomethyl

group, 1-aminoethyl group, 2-aminoethyl group, 2-aminoisobutyl group, 1,2-diaminoethyl group, 1,3-diaminoisopropyl group, 2,3-diamino-t-butyl group, 1,2,3-triaminopropyl group, cyanomethyl group, 1-cyanoethyl group, 2-cyanoethyl group, 2-cyanoisobutyl group, 1,2-dicyanoethyl group, 1,3-dicyanoisopropyl group, 2,3-dicyano-t-butyl group, 1,2,3-tricyanopropyl group, nitromethyl group, 1-nitroethyl group, 2-nitroethyl group, 2-nitroisobutyl group, 1,2-dinitroethyl group, 1,3-dinitroisopropyl group, 2,3-dinitro-t-butyl group, and 1,2,3-trinitropropyl group.

Examples of the substituted or unsubstituted cycloalkyl group having 3 to 50 ring carbon atoms include a cyclopropyl group, cyclobutyl group, cyclopentyl group, cyclohexyl group, 4-methylcyclohexyl group, 1-adamantyl group, 2-adamantyl group, 1-norbornyl group, and 2-norbornyl group.

The substituted or unsubstituted alkoxy group having 1 to 50 carbon atoms is a group represented by $-OY_1$, and examples of $Y_1$ are the same as the examples of the substituted or unsubstituted alkyl group having 1 to 50 carbon atoms.

Examples of the substituted or unsubstituted aralkyl group having 7 to 50 carbon atoms include a benzyl group, 1-phenylethyl group, 2-phenylethyl group, 1-phenylisopropyl group, 2-phenylisopropyl group, phenyl-t-butyl group, α-naphthylmethyl group, 1-α-naphthylethyl group, 2-α-naphthylethyl group, 1-α-naphthylisopropyl group, 2-α-naphthylisopropyl group, β-naphthylmethyl group, 1-β-naphthylethyl group, 2-β-naphthylethyl group, 1-β-naphthylisopropyl group, 2-β-naphthylisopropyl group, 1-pyrrolylmethyl group, 2-(1-pyrrolyl)ethyl group, p-methylbenzyl group, m-methylbenzyl group, o-methylbenzyl group, p-chlorobenzyl group, m-chlorobenzyl group, o-chlorobenzyl group, p-bromobenzyl group, m-bromobenzyl group, o-bromobenzyl group, p-iodobenzyl group, m-iodobenzyl group, o-iodobenzyl group, p-hydroxybenzyl group, m-hydroxybenzyl group, o-hydroxybenzyl group, p-aminobenzyl group, m-aminobenzyl group, o-aminobenzyl group, p-nitrobenzyl group, m-nitrobenzyl group, o-nitrobenzyl group, p-cyanobenzyl group, m-cyanobenzyl group, o-cyanobenzyl group, 1-hydroxy-2-phenylisopropyl group, and 1-chloro-2-phenylisopropyl group.

The substituted or unsubstituted aryloxy group having 6 to 50 ring carbon atoms is a group represented by $-OY_2$, and examples of $Y_2$ are the same as the examples of the substituted or unsubstituted aryl group having 6 to 50 ring carbon atoms and the substituted or unsubstituted heterocyclic group having 5 to 50 ring atoms.

The substituted or unsubstituted arylthio group having 6 to 50 ring carbon atoms is a group represented by $-SY_3$, and examples of $Y_3$ are the same as the examples of the substituted or unsubstituted aryl group having 6 to 50 ring carbon atoms and the substituted or unsubstituted heterocyclic group having 5 to 50 ring atoms.

The substituted or unsubstituted alkoxycarbonyl group having 1 to 50 carbon atoms is a group represented by -COOZ, and examples of Z are the same as the examples of the substituted or unsubstituted alkyl group having 1 to 50 carbon atoms.

The substituted or unsubstituted silyl group is a group represented by $-Si(Rx_1)(Rx_2)(Rx_3)$, where $Rx_1$, $Rx_2$, and $Rx_3$ are each independently a hydrogen atom, a substituted or unsubstituted aryl group having 6 to 50 ring carbon atoms, or a substituted or unsubstituted heterocyclic group having 5 to 50 ring atoms. Examples of the substituted or unsubstituted aryl group having 6 to 50 ring carbon atoms or the substituted or unsubstituted heterocyclic group having 5 to 50 ring atoms in the substituted or unsubstituted silyl group are the same as the examples thereof described above.

Examples of the halogen atom include fluorine, chlorine, bromine, and iodine.

In the formula (10) or the formula (11), the groups mentioned as "substituted or unsubstituted" are each preferably an "unsubstituted" group.

In the organic solid up-conversion material of the present exemplary embodiment, specific examples of the organic luminescent material include the following compounds; however, the invention is not limited to the following compounds.

[Formula 9]

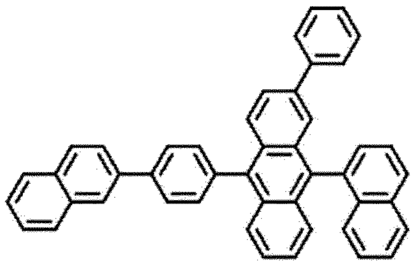
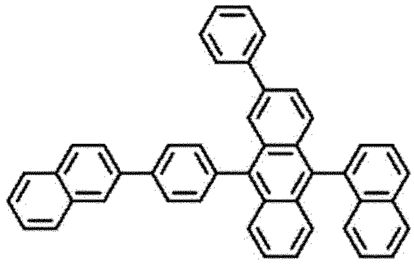
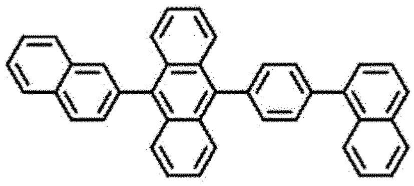
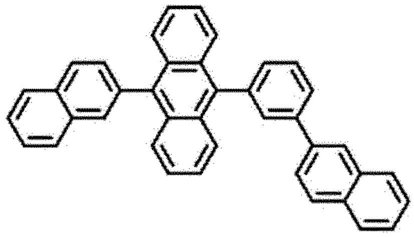
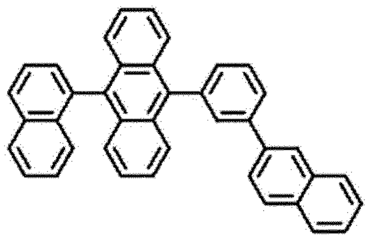
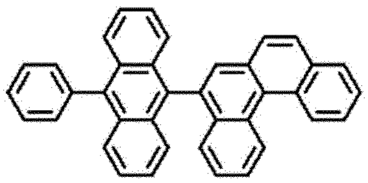
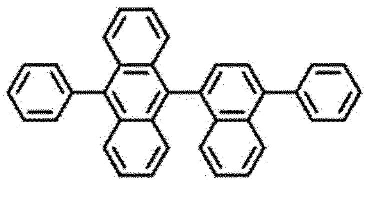
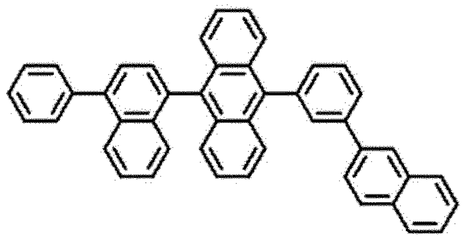

In the organic solid up-conversion material of the present exemplary embodiment, the triplet sensitizer is preferably a compound having a local maximum absorption wavelength within the wavelength range of sunlight. As the triplet sensitizer, a compound having a local maximum absorption wavelength in a range from 200 nm to 1,000 nm is usually used. The triplet sensitizer preferably has a local maximum absorption wavelength in a range from 500 nm to 700 nm. When the local maximum absorption wavelength of the triplet sensitizer is within this range, light with a relatively long wavelength that is not utilized in typical light-secondary energy conversion elements (elements for converting light into secondary energy), such as a solar cell and a hydrogen generation photocatalyst, can be converted into light with a relatively short wavelength that is utilized in such typical light-secondary energy conversion elements. Accordingly, the organic solid up-conversion material of the present exemplary embodiment enables light in a wide wavelength range included in sunlight to be effectively utilized in light-secondary energy conversion elements. In the organic solid up-conversion material of the present exemplary embodiment, in order to effectively utilize light with wavelengths in the blue, violet, and ultraviolet regions, the triplet sensitizer may be a compound having a local maximum absorption wavelength in a range from 250 nm to 499 nm.

As for the triplet sensitizer, even molecular species that have not hitherto been called dyes can also be used as long as they are compounds having light absorption in a range from the ultraviolet region to the infrared region. Examples of the triplet sensitizer include acenaphthene derivatives, acetophenone derivatives, anthracene derivatives, diphenylacetylene derivatives, acridan derivatives, acridine derivatives, acridone derivatives, thioacridone derivatives, angelicin derivatives, anthracene derivatives, anthraquinone derivatives, azafluorene derivatives, azulene derivatives, benzyl derivatives, carbazole derivatives, coronene derivatives, sumanene derivatives, biphenylene derivatives, fluorene derivatives, perylene derivatives, phenanthrene derivatives, phenanthroline derivatives, phenazine derivatives, benzophenone derivatives, pyrene derivatives, benzoquinone derivatives, biacetyl derivatives, bianthranyl derivatives, fullerene derivatives, graphene derivatives, carotene derivatives, chlorophyll derivatives, chrysene derivatives, cinnoline derivatives, coumarin derivatives, curcumin derivatives, dansylamide derivatives, flavone derivatives, fluorenone derivatives,

fluorescein derivatives, helicene derivatives, indene derivatives, lumichrome derivatives, lumiflavin derivatives, oxadiazole derivatives, oxazole derivatives, periflanthene derivatives, phenol derivatives, phenothiazine derivatives, phenoxazine derivatives, phthalazine derivatives, phthalocyanine derivatives, picene derivatives, porphyrin derivatives, porphycene derivatives, hemiporphycene derivatives, subphthalocyanine derivatives, psoralen derivatives, angelicin derivatives, purine derivatives, pyrene derivatives, pyromethene derivatives, pyridyl ketone derivatives, phenyl ketone derivatives, pyridyl ketone derivatives, thienyl ketone derivatives, furanyl ketone derivatives, quinazoline derivatives, quinoline derivatives, quinoxaline derivatives, retinal derivatives, retinol derivatives, rhodamine derivatives, riboflavin derivatives, rubrene derivatives, squaline derivatives, stilbene derivatives, tetracene derivatives, pentacene derivatives, anthraquinone derivatives, tetracenequinone derivatives, pentacenequinone derivatives, thiophosgene derivatives, indigo derivatives, thioindigo derivatives, thioxanthene derivatives, thymine derivatives, triphenylene derivatives, triphenylmethane derivatives, triaryl derivatives, tryptophan derivatives, uracil derivatives, xanthene derivatives, ferrocene derivatives, azulene derivatives, biacetyl derivatives, terphenyl derivatives, terfuran derivatives, terthiophene derivatives, oligoaryl derivatives, fullerene derivatives, conjugated polyene derivatives, group 14 element-containing fused polycyclic aromatic compound derivatives, and fused polycyclic hetero aromatic compound derivatives. The triplet sensitizer is not limited thereto.

Specific examples of the triplet sensitizer include metalloporphyrins (metal complexes of porphyrins); metallotetraazaporphyrins (metal complexes of tetraazaporphyrins); metallophthalocyanines (metal complexes of phthalocyanines; an iodine derivative of 3,5-dimethyl-boron dipyrromethene; boron dipyrromethenes such as an iodine derivative of 3,5-dimethyl-8-phenylboron dipyrromethene; Schiff base metal complexes such as salen-metal complexes; metal-bipyridine complexes such as rubidium-bipyridine complexes and iridium-phenanthroline complexes; metal-phenanthroline complexes; naphthalenediimides such as N-alkylnaphthalenediimide; acridones such as N-methylacridone and N-butyl-2-chloroacridone; thioxanthones such as 2,4-diethylthioxanthone, xanthones, and xanthenes; acridines such as acridine yellow; coumarins such as coumarin 6 and coumarin 314; biacetyls such as 2,3-butanedione; anthracenes such as 9,10-dibromoanthracene and 9,9'-bianthryl; oligoaryls such as bifuran, bithiophene, and bis(benzoxazolyl)thiophene; and fused polycyclic hetero aromatic compounds such as chrysene, phenanthrene or derivatives thereof. The triplet sensitizer is not limited thereto.

In the organic solid up-conversion material of the present exemplary embodiment, the triplet sensitizer is preferably an organic metal complex. The "organic metal complex" encompasses both an organometallic compound having a metal-carbon bond and a metal complex having a coordinate bond. The metal complex having a coordinate bond includes metal and a ligand that coordinates to the metal.

An organic metal complex serving as the triplet sensitizer easily transfers light energy to the organic luminescent material. The metal atom that forms the organic metal complex serving as the triplet sensitizer is not particularly limited but is, for example, at least one metal atom selected from the group consisting of Li, Mg, Al, Ti, V, Mn, Fe, Co, Ni, Cu, Zn, Ga, Ru, Pd, Ag, Re, Os, Ir, Pt, and Pb. The metal atom that forms the organic metal complex serving as the triplet sensitizer is preferably Pt or Pd.

In the organic solid up-conversion material of the present exemplary embodiment, the triplet sensitizer preferably contains a platinum atom and is more preferably an organic metal complex containing a platinum atom.

Examples of the ligand in the organic metal complex include porphyrins and substitution products thereof, such as octaethylporphyrin; phthalocyanines and substitution products thereof, such as tetra-tert-butyl phthalocyanine; and naphthalocyanines and substitution products thereof, such as tetra-tert-butyl naphthalocyanine.

Examples of substituents in the substitution products include hydrocarbon groups such as linear hydrocarbon groups, e.g., alkyl groups (such as a methyl group, ethyl group, and t-butyl group), alkenyl groups (such as a vinyl group and allyl group), and alkynyl groups (such as an ethynyl group and propynyl group); and hydrocarbon groups having an acid group, e.g., carboxyalkyl groups (such as a carboxymethyl group and carboxyethyl group).

Of these, the ligand in the organic metal complex is preferably porphyrin or a substitution product thereof or phthalocyanine or a substitution product thereof, more preferably porphyrin or a substitution product thereof, and still more preferably a substitution product of porphyrin.

Specific examples of the organic metal complex serving as the triplet sensitizer include metal complexes of porphyrin or substitution products thereof and metal complexes of phthalocyanine or substitution products thereof. Of these, metal complexes of porphyrin or substitution products thereof are preferred.

The metal atom included in metalloporphyrins (metal complexes of porphyrins) and metallophthalocyanines (metal complexes of phthalocyanines) is, for example, at least one metal atom selected from the group consisting of Pt, Pd, Ru, Rh, Ir, Zn, and Cu. Porphyrin and substitution products thereof may be referred to as porphyrins, and phthalocyanine and substitution products thereof may be referred to as phthalocyanines.

It is also preferable that the organic metal complex serving as the triplet sensitizer be at least one metal complex selected from the group consisting of Pt complexes including, as a ligand, porphyrin or a substitution product thereof, Pt complexes including, as a ligand, phthalocyanine or a substitution product thereof, Pt complexes including, as a ligand, naphthalocyanine or a substitution product thereof, Pd complexes including, as a ligand, porphyrin or a substitution

product thereof, Pd complexes including, as a ligand, phthalocyanine or a substitution product thereof, and Pd complexes including, as a ligand, naphthalocyanine or a substitution product thereof.

Of the examples of the triplet sensitizer, examples of the triplet sensitizer having a local maximum absorption wavelength in a range from 500 nm to 700 nm and including metal in the structure thereof include compounds represented by formula (20) below.

[Formula 10]

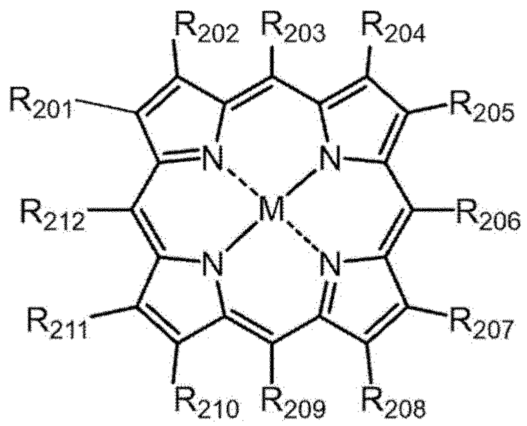

(20)

In the formula (20), $R_{201}$, $R_{202}$, $R_{204}$, $R_{205}$, $R_{207}$, $R_{208}$, $R_{210}$, and $R_{211}$ are each independently a hydrogen atom or any substituent including a hydrophilic functional group, $R_{201}$, $R_{202}$, $R_{204}$, $R_{205}$, $R_{207}$, $R_{208}$, $R_{210}$, and $R_{211}$ are mutually the same or different, two of $R_{201}$, $R_{202}$, $R_{204}$, $R_{205}$, $R_{207}$, $R_{208}$, $R_{210}$, and $R_{211}$ that are adjacent to each other may be bonded together to form a five-membered ring or six-membered ring having any substituent including a hydrogen atom, $R_{203}$, $R_{206}$, $R_{209}$, and $R_{212}$ each independently represent an aryl group having any substituent including a hydrogen atom, $R_{203}$, $R_{206}$, $R_{209}$, and $R_{212}$ are mutually the same or different, and M represents a metal atom.

Herein, the term "any substituent including a hydrogen atom" means a hydrogen atom or any substituent other than a hydrogen atom. Furthermore, when a plurality of "any substituents including a hydrogen atom" are present, the plurality of "any substituents including a hydrogen atom" may be bonded together to form a five-membered ring or six-membered ring having any substituent including a hydrogen atom or may not be bonded together.

At least one of $R_{201}$, $R_{202}$, $R_{204}$, $R_{205}$, $R_{207}$, $R_{208}$, $R_{210}$, or $R_{211}$ in the formula (20) is a hydrophilic functional group, and specific examples of the hydrophilic functional group include a hydrogen atom, alkyl groups (for example, alkyl groups having 1 to 12 carbon atoms), alkenyl groups, alkynyl groups, halogen atoms, hydroxy group (hydroxyl group), alkylcarbonyloxy groups, arylcarbonyloxy groups, alkoxycarbonyloxy groups, aryloxycarbonyloxy groups, carboxylates, alkylcarbonyl groups, arylcarbonyl groups, alkoxycarbonyl groups, aminocarbonyl group, alkylaminocarbonyl groups, dialkylaminocarbonyl groups, alkylthiocarbonyl groups, alkoxy groups, phosphate group, phosphonate group, phosphinate group, thiocarboxylic acid group, sulfate group, sulfenate group, sulfinate group, sulfonate group, phosphoric acid group, phosphonic acid group, phosphinic acid group, thiocarboxylic acid, sulfuric acid group, sulfenic acid group, sulfinic acid group, sulfonic acid group, cyano group, amino groups (including alkylamino groups, dialkylamino groups, arylamino groups, diarylamino groups, and alkylarylamino groups), acylamino groups (including alkylcarbonylamino groups, arylcarbonylamino groups, carbamoyl group, and ureido group), amidino group, imino group, sulfhydryl group, alkylthio groups, arylthio groups, alkylsulfinyl groups, sulfamoyl group, sulfonamide group, nitro group, trifluoromethyl group, cyano group, azide group, heterocyclic groups, alkylaryl groups, aryl groups, and heteroaryl groups; however, the hydrophilic functional group is not limited thereto.

Examples of the substituent on the five-membered ring or six-membered ring formed by bonding together two adjacent ones of $R_{201}$, $R_{202}$, $R_{204}$, $R_{205}$, $R_{207}$, $R_{208}$, $R_{210}$, and $R_{211}$ included in the formula (20) include, but are not limited to, the substituents cited as examples of $R_{201}$, $R_{202}$, $R_{204}$, $R_{205}$, $R_{207}$, $R_{208}$, $R_{210}$, and $R_{211}$. The five-membered ring or six-membered ring may or may not be linked to another substituted or unsubstituted porphyrin ring.

Examples of $R_{203}$, $R_{206}$, $R_{209}$, and $R_{212}$ in the formula (20) include, but are not limited to, substituents cited as examples of $R_{201}$, $R_{202}$, $R_{204}$, $R_{205}$, $R_{207}$, $R_{208}$, $R_{210}$, and $R_{211}$.

The metal atom M in the formula (20) is, for example, at least one metal atom selected from the group consisting of Pt, Pd, Ru, Rh, Ir, Zn, and Cu.

Examples of the metalloporphyrins represented by the formula (20) include meso-tetraphenyl-tetrabenzoporphyrin metal complexes such as meso-tetraphenyl-tetrabenzoporphyrin palladium (CAS No.: 119654-64-7), octaethylporphyrin metal complexes such as octaethylporphyrin palladium (CAS No.: 24804-00-0), and octaethylporphyrin metal complexes such as meso-tetraphenyl-octamethoxy-tetranaphtho[2,3]porphyrin palladium described in a literature (Y. Murakami et al., J. Phy., Chem. B, 118 (2014) 14442).

Examples of the metallotetraazaporphyrins include a compound represented by formula (21) below.

[Formula 11]

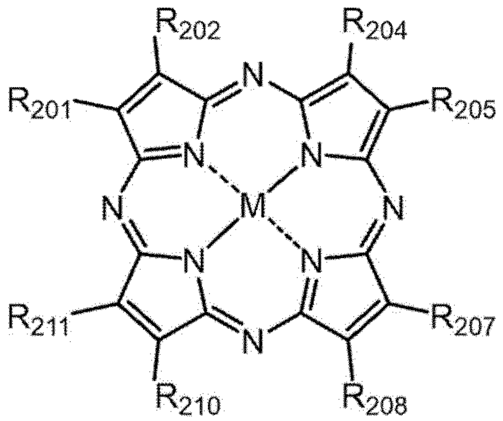

(21)

In the formula (21), $R_{201}$, $R_{202}$, $R_{204}$, $R_{205}$, $R_{207}$, $R_{208}$, $R_{210}$, $R_{211}$, and M represent the same as $R_{201}$, $R_{202}$, $R_{204}$, $R_{205}$, $R_{207}$, $R_{208}$, $R_{210}$, $R_{211}$, and M in the formula (20), respectively.

The triplet sensitizer may be an organic photosensitizing molecule that does not include metal in the structure thereof. Use of such a triplet sensitizer that does not include metal can avoid the generation of environmental pollution due to metal in the production and disposal of the organic solid up-conversion material. Specifically, examples of the triplet sensitizer that does not include metal include a compound represented by formula (22) below (boron dipyrromethenes) and C70. These triplet sensitizers may be used alone or as a mixture of two or more thereof.

[Formula 12]

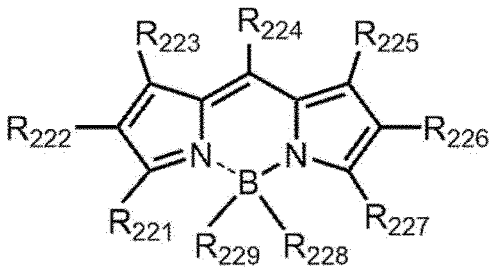

(22)

In the formula (22), $R_{221}$ to $R_{227}$ each independently represent a hydrogen atom or any substituent including a hydrophilic functional group, at least one of $R_{221}$ to $R_{227}$ is a hydrophilic functional group, among $R_{221}$ to $R_{227}$, substituents adjacent to each other (at least one of the pair of $R_{221}$ and $R_{222}$, the pair of $R_{222}$ and $R_{223}$, the pair of $R_{225}$ and $R_{226}$, or the pair of $R_{225}$ and $R_{227}$) may be bonded together to form a five-membered ring or six-membered ring having any substituent including a hydrogen atom, and $R_{228}$ and $R_{229}$ each independently represent a halogen atom, a hydrophilic functional group, a substituted or unsubstituted alkyl group having 1 to 5 carbon atoms, or a substituted or unsubstituted alkoxy group having 1 to 5 carbon atoms.

At least one of $R_{221}$ to $R_{227}$ in the formula (22) is a hydrophilic functional group, and specific examples of the hydrophilic functional group include, but are not limited to, a hydrogen atom, aliphatic hydrocarbon groups such as alkyl groups, alkenyl groups, and alkynyl groups, halogen atoms, hydroxy group (hydroxyl group), alkylcarbonyloxy groups, arylcarbonyloxy groups, alkoxycarbonyloxy groups, aryloxycarbonyloxy groups, carboxylates, alkylcarbonyl groups, arylcarbonyl groups, alkoxycarbonyl groups, aminocarbonyl group, alkylaminocarbonyl groups, dialkylaminocarbonyl groups, alkylthiocarbonyl groups, alkoxy groups, phosphate group, phosphonate group, phosphinate group, thiocarboxylate group, sulfate group, sulfenate group, sulfinate group, sulfonate group, phosphoric acid group, phosphonic acid group, phosphinic acid group, thiocarboxylic acid, sulfuric acid group, sulfenic acid group, sulfinic acid group, sulfonic group, cyano group, amino groups (including alkylamino groups, dialkylamino groups, arylamino groups, diarylamino

groups, and alkylarylamino groups), acylamino groups (including alkylcarbonylamino groups, arylcarbonylamino groups, carbamoyl group, and ureido group), amidino group, imino group, sulfhydryl group, alkylthio groups, arylthio groups, alkylsulfinyl groups, sulfamoyl group, sulfonamide group, nitro group, trifluoromethyl group, cyano group, azide group, heterocyclic groups, alkylaryl groups, phenoxy group, aryl groups, heteroaryl groups, and heteroaryloxy groups.

Examples of the substituent on the five-membered ring or six-membered ring formed by bonding together substituents adjacent to each other (at least one of the pair of $R_{221}$ and $R_{222}$, the pair of $R_{222}$ and $R_{223}$, the pair of $R_{225}$ and $R_{226}$, or the pair of $R_{225}$ and $R_{227}$) included in the formula (22) include, but are not limited to, the substituents cited as examples of $R_{221}$ to $R_{227}$.

$R_{221}$, $R_{223}$, $R_{225}$, and $R_{227}$ in the formula (22) may be each independently, for example, a hydrogen atom, a halogen atom, a hydrophilic functional group, a substituted or unsubstituted aliphatic hydrocarbon group having 1 to 4 carbon atoms, a substituted or unsubstituted phenyl group, a substituted or unsubstituted phenoxy group, a substituted or unsubstituted thienyl group, a substituted or unsubstituted thienoxy group, a 2-carboxylethenyl group represented by formula (23) below, or a 2-carboxyl-2-cyanoethenyl group represented by formula (24) below.

[Formula 13]

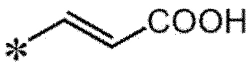

(23)

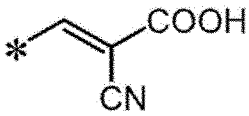

(24)

$R_{222}$ and $R_{226}$ in the formula (22) are preferably each independently a hydrogen atom, a halogen atom, a hydrophilic functional group, a substituted or unsubstituted aliphatic hydrocarbon group having 1 to 4 carbon atoms, a substituted or unsubstituted phenyl group, a substituted or unsubstituted phenoxy group, a substituted or unsubstituted thienyl group, a substituted or unsubstituted thienoxy group, a 2-carboxylethenyl group represented by the formula (23), or a 2-carboxyl-2-cyanoethenyl group represented by the formula (24).

More preferably, $R_{222}$ and $R_{226}$ in the formula (22) are each independently a hydrogen atom, a bromine atom, or an iodine atom, and at least one of $R_{222}$ or $R_{225}$ is a bromine atom or an iodine atom.

Still more preferably, $R_{222}$ and $R_{226}$ in the formula (22) are each independently a hydrogen atom or an iodine atom, and at least one of $R_{222}$ or $R_{225}$ is an iodine atom.

$R_{224}$ in the formula (22) is preferably a hydrogen atom, a halogen atom, a hydrophilic functional group, a substituted or unsubstituted aliphatic hydrocarbon group having 1 to 4 carbon atoms, a substituted or unsubstituted phenyl group, a substituted or unsubstituted phenoxy group, a substituted or unsubstituted thienyl group, a substituted or unsubstituted thienoxy group, a 2-carboxylethenyl group represented by the formula (23), or a 2-carboxyl-2-cyanoethenyl group represented by the formula (24).

$R_{224}$ in the formula (22) is more preferably a substituted or unsubstituted phenyl group.

$R_{224}$ in the formula (22) is still more preferably an unsubstituted phenyl group, an alkyl-substituted phenyl group, or a phenyl group having a hydrophilic functional group.

$R_{228}$ and $R_{229}$ in the formula (22) are each independently a halogen atom, a hydrophilic functional group, a substituted or unsubstituted alkyl group having 1 to 5 carbon atoms, or a substituted or unsubstituted alkoxy group having 1 to 5 carbon atoms, and $R_{228}$ and $R_{229}$ in the formula (22) are preferably fluorine atoms.

The compound represented by the formula (22) is more preferably a compound in which $R_{221}$ to $R_{227}$ are each independently a hydrogen atom, a halogen atom, a hydrophilic functional group, a substituted or unsubstituted aliphatic hydrocarbon group having 1 to 4 carbon atoms, a substituted or unsubstituted phenyl group, a substituted or unsubstituted phenoxy group, a substituted or unsubstituted thienyl group, a substituted or unsubstituted thienoxy group, a 2-carboxylethenyl group represented by the formula (23), or a 2-carboxyl-2-cyanoethenyl group represented by the formula (24).

The compound represented by the formula (22) is still more preferably a compound represented by formula (25) below. The compound represented by formula (25) below can realize a light up-conversion material having a higher optical wavelength conversion efficiency.

[Formula 14]

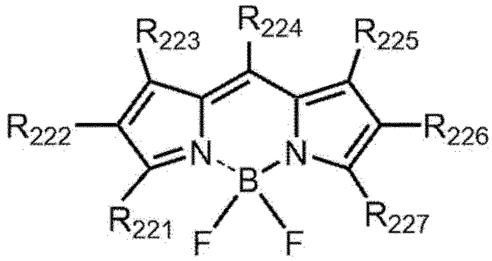

(25)

In the formula (25), $R_{221}$, $R_{223}$, $R_{225}$, and $R_{227}$ each independently represent a hydrophilic functional group or a substituted or unsubstituted alkyl group having 1 to 3 carbon atoms, $R_{222}$ and $R_{225}$ each independently represent a hydrogen atom, a bromine atom, or an iodine atom, at least one of $R_{222}$ or $R_{225}$ is a bromine atom or an iodine atom, and $R_{224}$ represents a substituted or unsubstituted phenyl group.

The triplet sensitizer is preferably a metalloporphyrin represented by the formula (20) or a compound represented by the formula (22).

In the organic solid up-conversion material of the present exemplary embodiment, specific examples of the triplet sensitizer include the following compounds; however, the invention is not limited to the following compounds.

[Formula 15]

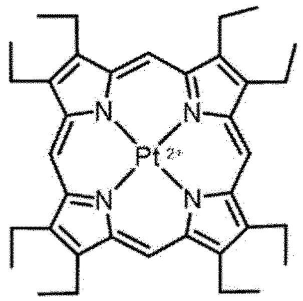

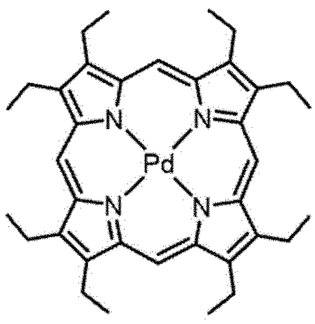

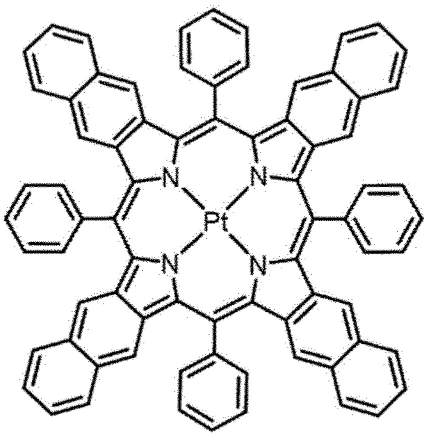

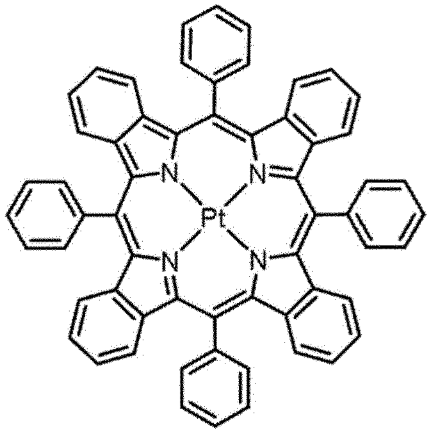

The total of the content of the triplet sensitizer and the content of the organic luminescent material in the organic solid up-conversion material of the present exemplary embodiment is preferably 90% by mass or more, more preferably 95% by mass or more, and still more preferably 99% by mass or more.

Method for Producing Organic Solid Up-Conversion Material

The organic solid up-conversion material of the present exemplary embodiment can be produced by a method including (P1) a step of dissolving a triplet sensitizer and an organic luminescent material in a first solvent to prepare a

starting solution, (P2) a step of heating the starting solution, (P3) a step of adding a second solvent to the heated starting solution, and (P4) a step of cooling the starting solution to which the second solvent has been added to precipitate a solid solution crystal. The method for producing an organic solid up-conversion material of the present exemplary embodiment is preferably a recrystallization method including the steps (P1) to (P4).

The method for producing an organic solid up-conversion material of the present exemplary embodiment enables the production of a solid solution crystal in which a triplet sensitizer is dissolved in a crystal of an organic luminescent material. The formation of this solid solution is considered to be due to the entropy effect. This system in which two types of molecules of the organic luminescent material and the triplet sensitizer are mixed is a binary eutectic system (finite mixture eutectic system) as illustrated in Fig. 2. In the method for producing an organic solid up-conversion material of the present exemplary embodiment, a solid solution crystal can be formed by causing crystallization while maintaining an equilibrium state.

The first solvent is a good solvent for the triplet sensitizer and the organic luminescent material, and the second solvent is a poor solvent for the triplet sensitizer and the organic luminescent material. The good solvent serving as the first solvent and the poor solvent serving as the second solvent are each independently appropriately selected in accordance with the types of triplet sensitizer and organic luminescent material serving as the solute. The good solvent serving as the first solvent is, for example, at least one solvent selected from the group consisting of toluene, ethylbenzene, octylbenzene, and chloroform. The poor solvent serving as the second solvent is, for example, at least one solvent selected from the group consisting of ethanol, butanol, acetonitrile, and hexane.

For example, in the step (P1), the triplet sensitizer and the organic luminescent material are preferably dissolved in the first solvent at room temperature (for example, in a range from 20 degrees C to 25 degrees C) to prepare a starting solution.

In the step (P4), the starting solution to which the second solvent has been added is preferably cooled to room temperature (for example, in a range from 20 degrees C to 25 degrees C) to precipitate the crystal.

The method for producing an organic solid up-conversion material of the present exemplary embodiment preferably further includes, after the step (P4), (P5) a step of separating the solid solution crystal from the first solvent and the second solvent. The method for separating the solid solution crystal from the first solvent and the second solvent may be, for example, a method of filtration.

It is also preferable that the method further include, after the step (P5), (P6) a step of drying the solid solution crystal by heating (may be referred to as a postheating step). By the step (P6), defects of the solid solution crystal structure are reduced to improve crystallinity, and the up-conversion quantum efficiency is further improved.

The production method of the present exemplary embodiment enables the production of an organic solid up-conversion material that exhibits a high up-conversion quantum efficiency at a low excitation light intensity and that exhibits high durability to excitation light.

Examples

The invention will now be described in more detail with reference to Examples. The invention is not limited to these Examples.

Compound

The structure of an organic luminescent material used in Example 1 is shown below.

[Formula 16]

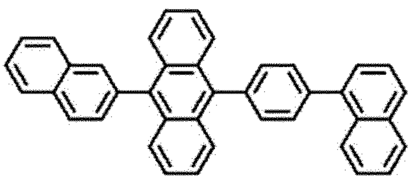

**A1**

The structures of organic luminescent materials used in Comparative Examples 1 and 2 are shown below.

[Formula 17]

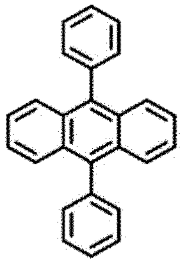

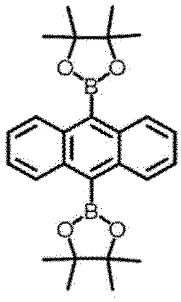

B1 C1

The structure of a triplet sensitizer used in Example 1 and Comparative Examples 1 and 2 is shown below.

[Formula 18]

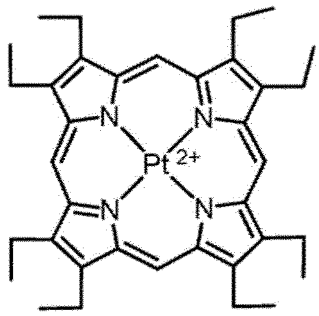

PtOEP

Example 1

In Example 1, 0.04 mmol of the compound A1 serving as the organic luminescent material and 0.00035 mmol of the compound PtOEP serving as the triplet sensitizer were first dissolved in 2 mL of toluene serving as a first solvent to prepare a starting solution. The molar ratio of the compound A1 to the compound PtOEP in the staring solution was 115:1. Next, the starting solution was heated to 80 degrees C. Subsequently, 6 mL of ethanol serving as a second solvent was added to the heated starting solution. The starting solution was then cooled to room temperature, and the precipitated solid was collected and dried to obtain a solid material.

Comparative Examples 1 and 2

In Comparative Examples 1 and 2, solid materials were obtained as in Example 1 except that the compound A1 serving as the organic luminescent material was changed to the organic luminescent materials shown in Table 2, and the starting material composition was changed to those shown in Table 2.

Evaluation of Physical Properties, etc.

Single-Crystal X-Ray Structure Analysis

The organic luminescent materials used as starting materials and the prepared solid materials were subjected to single-crystal X-ray structure analysis to measure the unit cell parameters.

The measurement results of the unit cell parameters are shown in Table 1. In Table 1, a, b, and c are the lengths (unit: angstrom Å) of sides of the unit cell, and $\alpha$, $\beta$, and $\gamma$ are the angles between the sides of the unit cell. V is the volume (unit: cubic angstrom $Å^3$) of the unit cell, Z is the number of molecules included in the unit cell, and the molar volume is calculated by a numerical formula: $(V/Z) \times N_A$. $N_A$ is the Avogadro number.

Triplet Excitation Lifetime

The triplet excitation lifetime (unit: millisecond ms) of each of the organic luminescent materials used as starting materials and the prepared solid materials was measured by the following method. Specifically, a sample was irradiated with pulse excitation light with a wavelength of 540 nm and a frequency of 20 Hz, the decay behavior of the up-conversion luminous intensity from the sample was measured, and a constant $\tau$ obtained by fitting the resulting decay curve with an exponential function $\exp(-t/\tau)$ was defined as the triplet excitation lifetime of an organic luminescent material. In the exponential function, t is the time elapsed since the pulse excitation light intensity becomes zero.

The measurement results of the triplet excitation lifetime are shown in Table 1. In Table 1, "< 0.4" indicates that the triplet excitation lifetime was less than 0.4 ms.

Up-Conversion Luminous Intensity: UC Luminous Intensity

The UC luminous intensity of each of the prepared solid materials was measured by the following method. Specifically, a sample was disposed under a reflection microscope and irradiated with excitation light with a wavelength of 532 nm. Of light emitted from the sample, a component of the excitation light reflected was removed by an optical filter, and the light was then captured in a spectrum meter to measure the up-conversion luminous intensity.

Fig. 3 shows an emission spectrum of the solid material according to Example 1. In the emission spectrum of Fig. 3, emission at 650 nm, which is monomeric phosphorescence of PtOEP, was not observed, but a maximum peak was observed at around 440 nm. That is, it was found that, in the solid material according to Example 1, PtOEP serving as the triplet sensitizer was dispersed in the crystal of the organic luminescent material, and the triplet energy of PtOEP generated by the excitation light was efficiently transferred to the organic luminescent material.

Up-Conversion Quantum Efficiency: UC Quantum Efficiency

In general, the UC quantum efficiency of an up-conversion material is represented by a ratio of the number of photons of up-conversion emission to the number of photons of excitation light absorbed by the material, and the maximum value of the UC quantum efficiency is 50% in the case of up-conversion emission based on TTA. The UC quantum efficiency of each of the prepared solid materials (up-conversion materials) was measured by the following comparative method. Specifically, Rhodamine 101 (fluorescence quantum efficiency $\Phi_{REF}$ = 87%) was used as a reference sample having a known fluorescence quantum efficiency, and the fluorescence intensity from the reference sample and the up-conversion luminous intensity from the up-conversion material were separately measured when excitation light with a wavelength of 532 nm was applied under a reflection microscope. Next, the reflection microscope was replaced by a transmission microscope, and the light absorption coefficients of the reference sample and the up-conversion material were measured. Subsequently, the up-conversion quantum efficiency $\Phi_{UC}$ was determined using the following numerical formula (Numerical Formula 3).

[Numerical Formula 1]

$$\phi_{UC} = \phi_{REF} \bullet \frac{\text{Excitation light intensity}_{REF}}{\text{Excitation light intensity}_{UC}} \bullet \frac{\text{Light absorption}_{REF}}{\text{Light absorption}_{UC}} \bullet \frac{\text{Luminous intensity}_{UC}}{\text{Luminous intensity}_{REF}} \bullet \frac{[\text{Refractive index}_{UC}]^2}{[\text{Refractive index}_{REF}]^2}$$

(Numerical Formula 3)

In the numerical formula (Numerical Formula 3), Excitation light intensity$_{REF}$ is the excitation light intensity when the fluorescence quantum efficiency $\Phi_{REF}$ of the reference sample is measured, Excitation light intensityuc is the excitation light intensity when the quantum efficiency $\Phi_{UC}$ of the up-conversion material is measured, Light absorption$_{REF}$ is the light absorption coefficient of the reference sample, Light absorptionuc is the light absorption coefficient of the up-conversion material, Luminous intensity$_{REF}$ is the fluorescence intensity when the fluorescence quantum efficiency $\Phi_{REF}$ of the reference sample is measured, Luminous intensityuc is the UC luminous intensity of the up-conversion material when the quantum efficiency $\Phi_{UC}$ of the up-conversion material is measured, Refractive index$_{REF}$ is the refractive index of the reference sample, and Refractive indexuc is the refractive index of the organic luminescent material. The refractive indices used are values each obtained by forming, on a glass substrate, a thin film of each material with a thickness of 50 nm by vacuum deposition, and measuring the thin film by an ellipsometry method. According to the numerical formula (Numerical Formula 3), the theoretical limit value of the up-conversion quantum efficiency based on TTA is 50%.

Excitation Durability

Excitation durability of the prepared solid materials was measured by the following method. Specifically, the same measurement system as that used in the measurement of the up-conversion luminous intensity was used, and excitation light with a wavelength of 532 nm and at an intensity of 0.2 W/$cm^2$ was continuously applied to measure a change in the up-conversion luminous intensity over time. An excitation light continuous irradiation time at which the up-conversion luminous intensity is decayed by 5% with respect to the initial UC luminous intensity (may be referred to as a 5% decay time) is defined as excitation durability and shown in Table 2. In Table 2, "$10^4$ <" indicates that the 5% decay time was $10^4$ seconds or more, and "< 60" indicates that the 5% decay time was less than 60 seconds.

Difference in Peak Wavelength

A maximum peak wavelength $\lambda_{M1}$ of a solution absorption spectrum of the triplet sensitizer alone and a maximum peak wavelength $\lambda_{MC}$ of a solid absorption spectrum of each of the prepared solid materials (mixtures containing the organic luminescent material and the triplet sensitizer) were measured, and the difference $\lambda_{M1}$ - $\lambda_{MC}$ between the peak wavelengths was calculated.

The solution absorption spectrum was determined by, under a transmission microscope equipped with a white LED as a light source, placing a solution cell in which the triplet sensitizer was dissolved in toluene, measuring the transmittance of light from the light source, and converting the results to an absorption spectrum. The solid absorption spectrum was measured in the same measurement system as that of the solution absorption spectrum.

Molar Concentration of Triplet Sensitizer

The molar concentration (unit: mol/L) of the triplet sensitizer in each of the prepared solid materials was measured by the following method. Specifically, solution cells in which toluene solutions having various different concentrations of the triplet sensitizer were enclosed were first prepared, and the transmittances were measured with the same transmission microscope as the transmission microscope used in the measurement of the solution absorption spectrum to prepare a calibration curve of the molar concentration of a solution versus the absorbance. Next, after the thickness of the solid material was measured, the solid material was disposed under the same transmission microscope as the above, and the absorbance was measured to calculate an absorbance in the case where the film thickness was the same as that of the solution cell. Lastly, the absorbance of the solid material was compared with the calibration curve to thereby determine the molar concentration of the triplet sensitizer in the solid material.

Up-Conversion Threshold Intensity: UC Threshold Intensity

An up-conversion threshold intensity (unit: W/$cm^2$) of each of the prepared solid materials was measured by the following method. It is known that, in up-conversion emission by TTA, the up-conversion luminous intensity is proportional to the square of excitation light in a region with a weak excitation light intensity, and the up-conversion luminous intensity is proportional to the first power of excitation light in a region with a strong excitation light intensity. The excitation light (wavelength: 542 nm) intensity dependence of the up-conversion luminous intensity was measured, and an excitation light intensity at which the inclination of the intensity dependence changed from 2 to 1 on a log-log plot was defined as the up-conversion threshold intensity. The lower the threshold intensity, the more efficient up-conversion emission occurs at a lower excitation light intensity.

Lowest Triplet Energy $T_1$

A measurement target compound was dissolved in EPA (diethyl ether:isopentane:ethanol = 5:5:2 (volume ratio)) so as to have a concentration of 10 μmol/L to prepare a solution, and the solution was placed in a quartz cell to provide a measurement sample. A phosphorescence spectrum (ordinate axis: phosphorescent luminous intensity, abscissa axis: wavelength) of this measurement sample was measured at a low temperature (77[K]). A tangent was drawn to the rise of the phosphorescence spectrum close to the short-wavelength region. An amount of energy calculated from a conversion equation (F1) below on a basis of a wavelength value $\lambda_{edge}$ [nm] at an intersection of the tangent and the abscissa axis was defined as the lowest triplet energy $T_1$. It should be noted that the lowest triplet energy $T_1$ may have an error of about plus or minus 0.02 eV depending on measurement conditions.

$$T_1 \text{ [eV]} = 1239.85/\lambda_{edge}$$

The tangent to the rise of the phosphorescence spectrum close to the short-wavelength region is drawn as follows. While moving on a curve of the phosphorescence spectrum from the short-wavelength region to the local maximum value closest to the short-wavelength region among the local maximum values of the phosphorescence spectrum, a tangent is checked at each point on the curve toward the long-wavelength of the phosphorescence spectrum. An inclination of the tangent increases along the rise of the curve (i.e., as a value of the ordinate axis increases). A tangent drawn at a point of the local maximum inclination (i.e., a tangent at an inflection point) is defined as the tangent to the rise of the phosphorescence spectrum close to the short-wavelength region.

A local maximum point where a peak intensity is 15% or less of the maximum peak intensity of the spectrum is not counted as the above-mentioned local maximum value closest to the short-wavelength region. A tangent drawn at a point that is closest to the local maximum value closest to the short-wavelength region and where the inclination of the curve is the local maximum value is defined as a tangent to the rise of the phosphorescence spectrum close to the short-wavelength region.

For phosphorescence measurement, the main body of a spectrophotofluorometer F-4500 produced by Hitachi High-Tech Corporation was used.

Lowest Singlet Energy $S_1$

A toluene solution of a measurement target compound at a concentration of 10 μmol/L was prepared and placed in a quartz cell. An absorption spectrum (ordinate axis: absorption intensity, abscissa axis: wavelength) of the resulting sample was measured at a normal temperature (300K). A tangent was drawn to the fall of the absorption spectrum close to the long-wavelength region, and a wavelength value $\lambda_{edge}$ [nm] at an intersection of the tangent and the abscissa axis was substituted into a conversion equation (F2) below to calculate the lowest singlet energy. Conversion Equation

$$(F2): S_1\ [eV] = 1239.85/\lambda_{edge}$$

A spectrophotometer produced by Hitachi, Ltd. (device name: U3310) was used as the device for measuring an absorption spectrum.

The tangent to the fall of the absorption spectrum close to the long-wavelength region is drawn as follows. While moving on a curve of the absorption spectrum from the local maximum value closest to the long-wavelength region, among the local maximum values of the absorption spectrum, in a long-wavelength direction, a tangent at each point on the curve is checked. An inclination of the tangent decreases and then increases in a repeated manner as the curve falls (i.e., a value of the ordinate axis decreases). A tangent drawn at a point where the inclination of the curve is the local minimum value and that is closest to the long-wavelength region (provided that a case where the absorbance is 0.1 or less is excluded) is defined as the tangent to the fall of the absorption spectrum close to the long-wavelength region.

A local maximum point where the value of the absorbance is 0.2 or less is not counted as the above-mentioned local maximum value closest to the long-wavelength region.

[Table 1]

| | | Example 1 Solid material | Organic luminescent material | | |
|---|---|---|---|---|---|
| Compound | | A1+PtOEP | A1 | B1 | C1 |
| Unit cell parameters | a [Å] | 18.8241 | 18.9032 | 10.683 | 9.9295 |
| | b [Å] | 7.5014 | 7.449 | 13.552 | 11.4486 |
| | c [Å] | 38.7559 | 38.5591 | 12.257 | 10.5115 |
| | a [°] | 90 | 90 | 90 | 90 |
| | β [°] | 96.531 | 96.953 | 90.54 | 97.691 |
| | γ[°] | 90 | 90 | 90 | 90 |
| | V [Å$^3$] | 5437.1 | 5389.57 | 1774.44 | 1184.19 |
| | Z [molecules] | 8 | 8 | 4 | 2 |
| | Molar volume [cm$^3$/mol] | 409.29 | 405.70 | 268.59 | 356.56 |
| Triplet excitation lifetime [ms] | | 5 | 5 | < 0.4 | < 0.4 |

[Table 2]

| | | Solid material | | |
|---|---|---|---|---|
| | | Example 1 | Comparative Example 1 | Comparative Example 2 |
| Organic luminescent material | Name | A1 | B1 | C1 |
| | $S_1$[eV] | 3.00 | 3.08 | - |
| | $T_1$[eV] | 1.80 | 1.82 | - |
| | Starting material composition [mmol] | 0.040 | 0.080 | 0.008 |
| Triplet sensitizer | Name | PtOEP | PtOEP | PtOEP |
| | $S_1$[eV] | 2.53 | 2.53 | 2.53 |
| | $T_1$[eV] | 1.96 | 1.96 | 1.96 |
| | Starting material composition [mmol] | 0.00035 | 0.00035 | 0.00035 |
| Difference between peak wavelengths $\lambda_{M1}$ - $\lambda_{MC}$ [nm] | | 2.9 | - | - |
| 5% Decay time [sec] | | $10^4$< | <60 | <60 |
| Molar concentration of triplet sensitizer [mol/L] | | $8\times10^{-5}$ | $<1\times10^{-6}$ | $<1\times10^{-6}$ |
| Threshold intensity [W/cm$^2$] | | 0.0021 | - | - |
| Up-conversion quantum efficiency [%] | | 12.8 | - | - |

Since the compound C1 serving as the organic luminescent material is a compound having an anthracene skeleton, the lowest singlet energy of the compound C1 is estimated to be about 3.0 eV, and the lowest triplet energy of the compound C1 is estimated to be about 1.8 eV. Accordingly, the lowest singlet energy of the compound C1 is considered to be larger than the lowest singlet energy 2.53 eV of the triplet sensitizer, and the lowest triplet energy of the compound C1 is considered to be smaller than the lowest triplet energy 1.96 eV of the triplet sensitizer.

Regarding the solid material of Example 1, the difference $\lambda_{M1}$ - $\lambda_{MC}$ between the peak wavelengths was small, and the solid material was confirmed to be monocrystalline from the results of X-ray structure analysis shown in Table 1; therefore it was found that the triplet sensitizer and the organic luminescent material formed a solid solution crystal.

Regarding each of the solid materials of Comparative Examples 1 and 2, the concentration of the triplet sensitizer in the solid material was excessively low, and $\lambda_{MC}$ was unable to be measured; therefore, the difference $\lambda_{M1}$ - $\lambda_{MC}$ between the peak wavelengths also was unable to be calculated. This is probably because the molar volumes of the crystals of the organic luminescent materials used in Comparative Examples 1 and 2 are small, and the triplet sensitizer is not sufficiently dissolved in the crystals of the organic luminescent materials.

The solid material of Example 1 was continuously irradiated with the excitation light for $10^4$ seconds. According to the results, the decay of the UC luminous intensity was 5% or less with respect to the initial UC luminous intensity, which showed high excitation durability.

The solid materials of Comparative Examples 1 and 2 were continuously irradiated with the excitation light for 300 seconds. According to the results, the decay of the luminous intensity was 20% to 80% with respect to the initial UC luminous intensity, which showed low excitation durability.

The solid material of Example 1 exhibited a high up-conversion quantum efficiency.

The light absorption coefficients of the up-conversion materials of Comparative Examples 1 and 2 were too small to determine the values, and the up-conversion quantum efficiencies were unable to be calculated on the basis of the numerical formula (Numerical Formula 3). Regarding the up-conversion materials of Comparative Examples 1 and 2, phosphorescence of the triplet sensitizer was also simultaneously observed together with up-conversion emission; therefore, the up-conversion quantum efficiencies are considered to be smaller by an order of magnitude than that of the up-conversion material of Example 1.

The solid material of Example 1 had a low UC threshold intensity and achieved efficient up-conversion emission at a low excitation light intensity.

The solid materials of Comparative Examples 1 and 2 each had an extremely low content ratio of the triplet sensitizer; therefore, the UC luminous intensity decreased during the measurement of the UC threshold intensity, and the UC threshold intensity was unable to be measured.

The results shown in Table 2 demonstrated that the solid material of Example 1 that formed a solid solution crystal was an organic solid up-conversion material that exhibited a high up-conversion quantum efficiency at a low excitation light intensity and exhibited high durability to excitation light.

## Claims

1. An organic solid up-conversion material comprising:

   a triplet sensitizer and an organic luminescent material,
   wherein the triplet sensitizer and the organic luminescent material satisfy relations of a numerical formula (Numerical Formula 1) below and a numerical formula (Numerical Formula 2) below, and
   the triplet sensitizer and the organic luminescent material form a solid solution crystal,

$$T_1(M1) \geq T_1(M2) \cdots \text{(Numerical Formula 1)}$$

$$S_1(M2) > S_1(M1) \cdots \text{(Numerical Formula 2)}$$

   $S_1(M1)$ is a lowest singlet energy of the triplet sensitizer,
   $T_1(M1)$ is a lowest triplet energy of the triplet sensitizer,
   $S_1(M2)$ is a lowest singlet energy of the organic luminescent material, and
   $T_1(M2)$ is a lowest triplet energy of the organic luminescent material.

2. The organic solid up-conversion material according to claim 1,

   wherein the triplet sensitizer absorbs excitation light to generate excited triplet excitons, and
   the organic luminescent material emits light having a maximum peak in a shorter wavelength region relative to a local maximum peak wavelength closest to a long-wavelength region in an absorption spectrum of the triplet sensitizer.

3. The organic solid up-conversion material according to claim 1 or 2,
   wherein a molar volume of the organic luminescent material in the organic solid up-conversion material is 360 $cm^3$/mol or more.

4. The organic solid up-conversion material according to any one of claims 1 to 3, wherein a molar concentration of the triplet sensitizer relative to the organic luminescent material is $1.0 \times 10^{-5}$ mol/L or more.

5. The organic solid up-conversion material according to any one of claims 1 to 4, wherein a difference $\lambda_{M1} - \lambda_{MC}$ between a maximum peak wavelength $\lambda_{M1}$ of a solution absorption spectrum of the triplet sensitizer alone and a maximum peak wavelength $\lambda_{MC}$ of a solid absorption spectrum of a mixture containing the organic luminescent material and the triplet sensitizer is 5 nm or less.

6. The organic solid up-conversion material according to any one of claims 1 to 5, wherein the organic luminescent material has a triplet excitation lifetime of 1 ms or more.

7. The organic solid up-conversion material according to any one of claims 1 to 6, wherein the organic luminescent material is an anthracene derivative.

8. The organic solid up-conversion material according to claim 7,
   wherein the organic luminescent material is a compound represented by formula (10) below or a compound represented by formula (11) below,

[Formula 1]

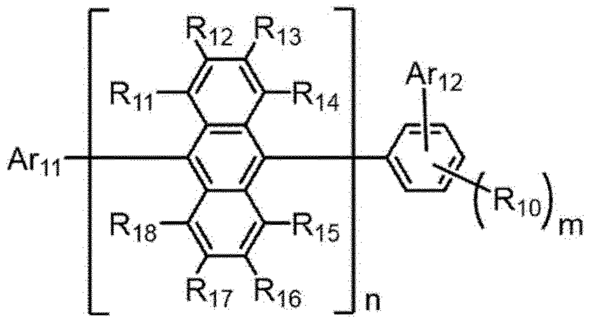

(10)

where, in the formula (10):

$Ar_{11}$ is a substituted or unsubstituted fused aryl group having 10 to 50 ring carbon atoms,
$Ar_{12}$ is a substituted or unsubstituted aryl group having 6 to 50 ring carbon atoms,
$R_{10}$ to $R_{18}$ are each independently a hydrogen atom, a substituted or unsubstituted aryl group having 6 to 50 ring carbon atoms, a substituted or unsubstituted heterocyclic group having 5 to 50 ring atoms, a substituted or unsubstituted alkyl group having 1 to 50 carbon atoms, a substituted or unsubstituted cycloalkyl group having 3 to 50 ring carbon atoms, a substituted or unsubstituted alkoxy group having 1 to 50 carbon atoms, a substituted or unsubstituted aralkyl group having 7 to 50 carbon atoms, a substituted or unsubstituted aryloxy group having 6 to 50 ring carbon atoms, a substituted or unsubstituted arylthio group having 6 to 50 ring carbon atoms, a substituted or unsubstituted alkoxycarbonyl group having 1 to 50 carbon atoms, a carboxy group, a halogen atom, a cyano group, a nitro group, or a hydroxy group,
four $R_{10}$ are mutually the same or different,
m is 4,
n is 1, 2, or 3, and
when n is 2 or 3, groups represented by formula (10a) below in the compound represented by the formula (10) are mutually the same or different,

[Formula 2]

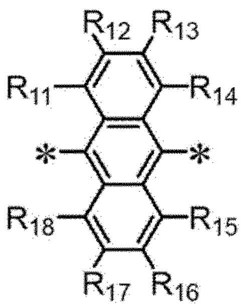

(10a)

[Formula 3]

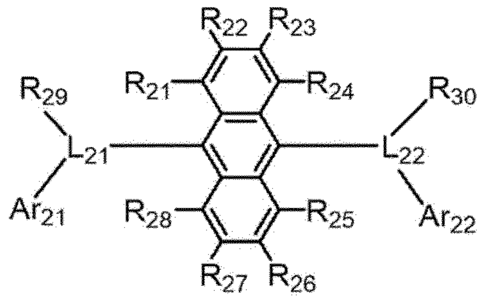

(11)

where, in the formula (11):

$L_{21}$ and $L_{22}$ are each independently a substituted or unsubstituted fused aryl group having 10 to 20 ring carbon atoms,

$Ar_{21}$ and $Ar_{22}$ are each independently a hydrogen atom or a substituted or unsubstituted aryl group having 6 to 50 ring carbon atoms,

$R_{21}$ to $R_{30}$ are each independently a hydrogen atom, a substituted or unsubstituted aryl group having 6 to 50 ring carbon atoms, a substituted or unsubstituted heterocyclic group having 5 to 50 ring atoms, a substituted or unsubstituted alkyl group having 1 to 50 carbon atoms, a substituted or unsubstituted cycloalkyl group having 3 to 50 ring carbon atoms, a substituted or unsubstituted alkoxy group having 1 to 50 carbon atoms, a substituted or unsubstituted aralkyl group having 7 to 50 carbon atoms, a substituted or unsubstituted aryloxy group having 6 to 50 ring carbon atoms, a substituted or unsubstituted arylthio group having 6 to 50 ring carbon atoms, a substituted or unsubstituted alkoxycarbonyl group having 1 to 50 carbon atoms, a substituted or unsubstituted silyl group, a carboxy group, a halogen atom, a cyano group, a nitro group, or a hydroxy group,

a plurality of $Ar_{21}$, a plurality of $Ar_{22}$, a plurality of $R_{29}$, and a plurality of $R_{30}$ are optionally present,

a combination of adjacent two or more of $Ar_{21}$ and $R_{29}$ are mutually bonded to form a substituted or unsubstituted monocyclic ring, mutually bonded to form a substituted or unsubstituted fused ring, or not mutually bonded,

a combination of adjacent two or more of $Ar_{22}$ and $R_{30}$ are mutually bonded to form a substituted or unsubstituted monocyclic ring, mutually bonded to form a substituted or unsubstituted fused ring, or not mutually bonded, and

a group represented by formula (11a) below and a group represented by formula (11b) below in the compound represented by the formula (11) are groups different from each other,

[Formula 4]

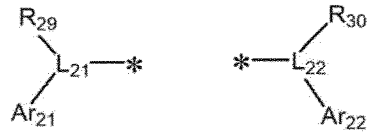

(11a) (11b)

**9.** The organic solid up-conversion material according to any one of claims 1 to 8, wherein the triplet sensitizer is an organic metal complex.

**10.** The organic solid up-conversion material according to any one of claims 1 to 9, wherein the triplet sensitizer contains a platinum atom.

FIG. 1

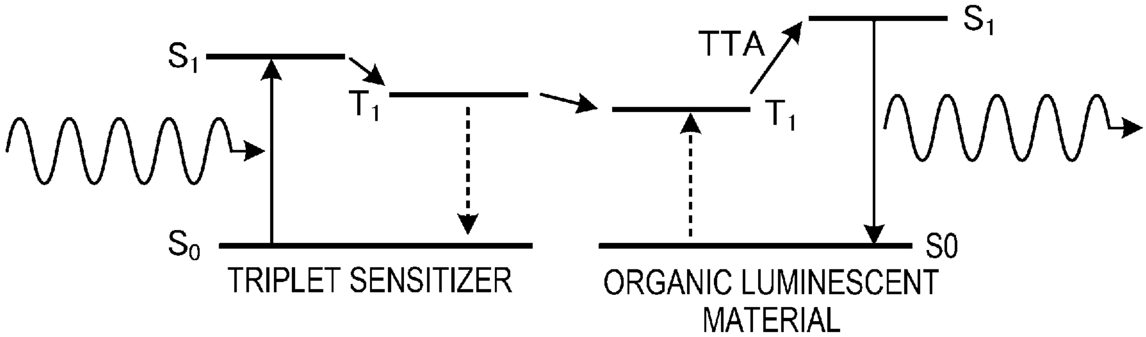
S1
T1
S0
TRIPLET SENSITIZER
TTA
S1
T1
S0
ORGANIC LUMINESCENT MATERIAL

F I G . 2

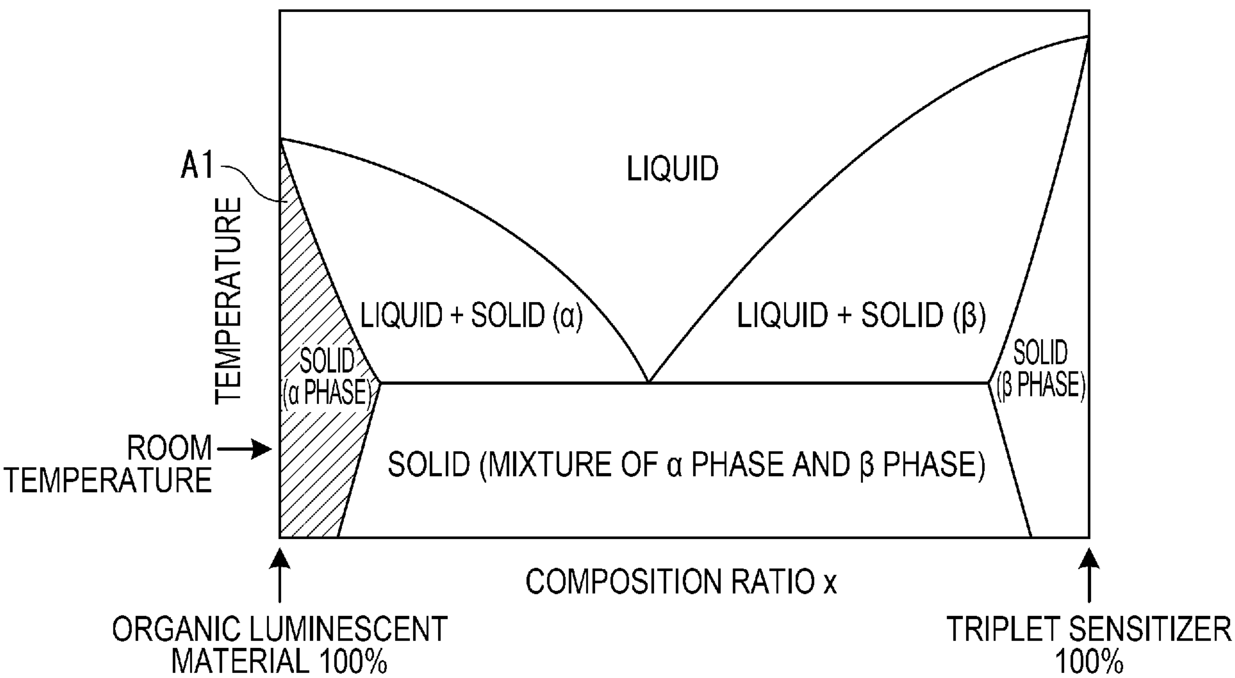
A1
TEMPERATURE
LIQUID
LIQUID + SOLID (α)
LIQUID + SOLID (β)
SOLID (α PHASE)
SOLID (β PHASE)
ROOM TEMPERATURE
SOLID (MIXTURE OF α PHASE AND β PHASE)
COMPOSITION RATIO x
ORGANIC LUMINESCENT MATERIAL 100%
TRIPLET SENSITIZER 100%

FIG.3

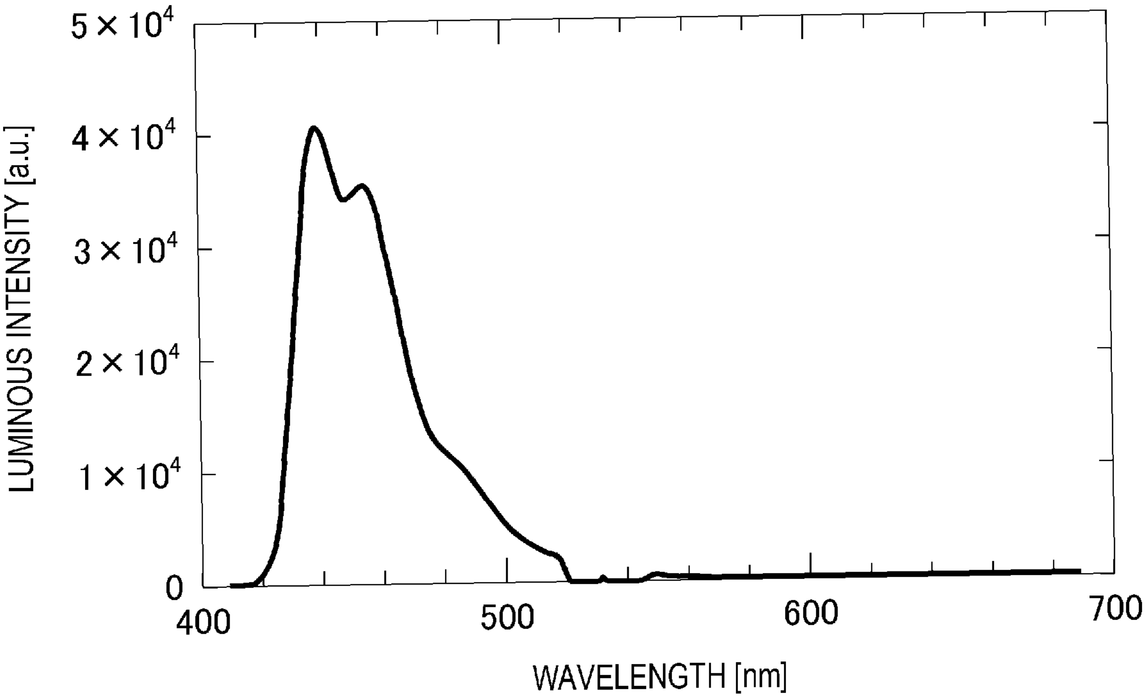
LUMINOUS INTENSITY [a.u.]
$5 \times 10^4$
$4 \times 10^4$
$3 \times 10^4$
$2 \times 10^4$
$1 \times 10^4$
0
400
500
600
700
WAVELENGTH [nm]

## INTERNATIONAL SEARCH REPORT

International application No.
**PCT/JP2022/037781**

**A. CLASSIFICATION OF SUBJECT MATTER**

***C09K 11/06***(2006.01)i
FI: C09K11/06; C09K11/06 610

According to International Patent Classification (IPC) or to both national classification and IPC

**B. FIELDS SEARCHED**

Minimum documentation searched (classification system followed by classification symbols)

C09K11/06

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

JSTPlus/JMEDPlus/JST7580 (JDreamIII); CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| X | OLESUND, Axel et al. Diphenylanthracene Dimers for Triplet-Triplet Annihilation Photon Upconversion: Mechanistic Insights for Intramolecular Pathways and the Importance of Molecular Geometry. JOURNAL OF THE AMERICAN CHEMICAL SOCIETY. vol. 143, 09 April 2021, pp. 5745-5754<br>abstract, result and discussion, fig. 1-5, table 2, conclusion, etc. | 1-10 |
| X | WO 2016/204301 A1 (UNIV KYUSHU NAT UNIV CORP) 22 December 2016 (2016-12-22)<br>claims, paragraphs [0026]-[0036], [0063]-[0074], production examples 5-6, etc. | 1-10 |
| X | JP 2017-171888 A (AIST) 28 September 2017 (2017-09-28)<br>claims, paragraphs [0067]-[0084], examples, etc. | 1-10 |
| X | JP 2021-80335 A (UNIV KYUSHU NAT UNIV CORP) 27 May 2021 (2021-05-27)<br>claims, paragraphs [0072]-[0088], examples 4-5, etc. | 1-10 |
| A | JP 2009-16693 A (IDEMITSU KOSAN CO LTD) 22 January 2009 (2009-01-22)<br>paragraph [0211], table 8, paragraph [0226], table 10 | 1-10 |
| A | JP 2016-74898 A (UNIV KYUSHU NAT UNIV CORP) 12 May 2016 (2016-05-12)<br>claims, examples, etc. | 1-10 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **15 December 2022** | **27 December 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**

International application No.
**PCT/JP2022/037781**

**C. DOCUMENTS CONSIDERED TO BE RELEVANT**

| Category* | Citation of document, with indication, where appropriate, of the relevant passages | Relevant to claim No. |
|---|---|---|
| A | US 2016/0104847 A1 (UNIVERSAL DISPLAY CORPORATION) 14 April 2016 (2016-04-14) claims, examples, etc. | 1-10 |

Form PCT/ISA/210 (second sheet) (January 2015)

**INTERNATIONAL SEARCH REPORT**
**Information on patent family members**

International application No.
**PCT/JP2022/037781**

| Patent document cited in search report | Publication date (day/month/year) | Patent family member(s) | Publication date (day/month/year) |
|---|---|---|---|
| WO 2016/204301 A1 | 22 December 2016 | (Family: none) | |
| JP 2017-171888 A | 28 September 2017 | US 2017/0267922 A1<br>claims, paragraphs [0088]-[0100], examples, etc. | |
| JP 2021-80335 A | 27 May 2021 | (Family: none) | |
| JP 2009-16693 A | 22 January 2009 | (Family: none) | |
| JP 2016-74898 A | 12 May 2016 | (Family: none) | |
| US 2016/0104847 A1 | 14 April 2016 | CN 105514288 A<br>KR 10-2016-0043505 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2020111751 A
- US 10950803 B
- WO 2004018587 A
- WO 2005061656 A


### Non-patent literature cited in the description


- *Journal of Applied Physics,* 2007, vol. 101, 023101
- *J. Phys. Chem. Lett.,* 2013, vol. 4, 4113-4118
- *J. Phys. Chem. C,* 2014, vol. 118, 14256-14265
- *Mater. Horiz.,* 2017, vol. 4, 83-87
- *J. Mater. Chem. C,* 2018, vol. 6, 5609-5615
- *CHEMICAL ABSTRACTS,* 119654-64-7
- *CHEMICAL ABSTRACTS,* 24804-00-0
- **Y. MURAKAMI et al.** *J. Phy., Chem. B,* 2014, vol. 118, 14442